# EUROPEAN PATENT APPLICATION

(11) **EP 4 480 321 A2**
(43) Date of publication of application: **25.12.2024**
(21) Application number: 24203633.3
(22) Date of filing: 25.10.2018
(51) Int. Cl.: A23K 50/15

(54) **PROCESS FOR PRODUCING ENCAPSULATED AMINO ACIDS FOR RUMINANTS**

(30) Priority: 03.11.2017 US 201762581296 P
(62) Divisional of application: 18874565.7
(71) Applicant: Archer Daniels Midland Company, Decatur, Illinois 62526 (US)
(72) Inventor: Baseeth, Shireen S., Decatur, 62526 (US); Cecava, Michael J., Monticello, 61856 (US); Doane, Perry H., Decatur, 46733 (US); Dong, Shuojia, Montreal, H1T 2XB (CA); Price, Michael, Mt. Zion, 62549 (US); Rohman, Brad, Decatur, 62521 (US); Stensrud, Elizabeth, Decatur, 62522 (US)
(74) Representative: dompatent von Kreisler Selting Werner - Partnerschaft von Patent- und Rechtsanwälten mbB

(57) **Abstract**

A process of encapsulating or coating amino acid particles is provided for producing an encapsulated amino acid feed product for ruminant animals. The encapsulated amino acid feed product comprises substantially uniform, round and dust free pastille granules. When the encapsulated amino acid feed product is fed to a ruminant animal, the product delivers high amounts of absorbable amino acid to the animal for direct nourishment, wherein the amino acid is not substantially fermented in the rumen of the animal. In an aspect, the process is a low-cost, high capacity, continuous process that produces a composition comprising greater than 50% by weight of a nourishing amino acid. The superior handling quality of the pastille granules allows for their use in further formulation of animal feeds, where homogeneous distribution of nutrients throughout the final feed mix is desired.

## Description

### TECHNICAL FIELD

The present invention relates to a process for making compositions that deliver high amounts of an absorbable amino acid to a ruminant animal for direct nourishment, and the compositions made by the process.

### BACKGROUND

Ruminant animals have evolved a large pre-gastric fermentation process that enables digestion of feedstuffs normally indigestible by mammalian hydrolytic-enzymatic processes. The beneficial processes associated with fermentation of cellulosic and other feedstuffs is the provision of nourishing end-products for the animal, such as microbial protein, volatile fatty acids, and vitamins. High quality proteins and free amino acids, however, can be fermented in the first stomach (also called the "rumen") of a ruminant animal, thereby reducing their value. In particular, free amino acids, if added directly to the diet, are fermented to ammonia and volatile fatty acids, which are of much lesser value to the animal than the amino acids. Thus, rumen fermentation of feedstuffs, particularly amino acids, present difficult challenges in the formulation of diets that precisely supply essential amino acids required for maximal growth and lactation of ruminant animals.

A variety of compositions and methods have been tested for controlled delivery and release of amino acids. Certain of these approaches have demonstrated utility and commercial value. However, it has proven difficult to develop and practice high capacity processing methods that consistently produce a rumen-protected amino acid, which then is released in the small intestine. Conventional coating technologies and methods of manufacturing encapsulated products are costly and can result in inconsistent product quality. Conventional coating materials typically serve no functional purpose beyond protecting the amino acid from rumen microbial fermentation. Certain coatings, while protective, are not permitted as safe to use in animal feed applications.

A variety of conventional protective barriers have been utilized. An effective barrier system restricts exposure of amino acids in feedstuff when passing through the rumen while readily releasing nutrients upon exposure to digestive processes in the acidic-enzymatic compartments of the digestive tract. Commercial interest has largely focused on the amino acids predicted to be most limiting to performance, such as methionine and lysine. Because each amino acid has unique chemical and physical characteristics, the barrier technology must be harmonized with particular characteristic(s) of the amino acid. Inclusion of the amino acid within a protective matrix or outer shell adds expense and inevitably dilutes the amino acid provided by the feedstuff product. Sufficient amino acid density within a feedstuff product, technical delivery, and cost effective manufacturing techniques have not been met by conventional approaches.

### SUMMARY

In an aspect of the disclosure, a manufacturing process is provided that overcomes the limitations of conventional manufacturing techniques, and that surprisingly produces compositions, which when fed to a ruminant animal, delivers high amounts of absorbable amino acid to the animal for direct nourishment. In an aspect, the process comprises deposition or pastillation techniques that produce a composition comprising greater than 50% by weight of a nourishing amino acid. The process produces a uniformly sized particle (i.e., an encapsulate or pastille) in a low-cost, continuous process possessing high capacity.

In an aspect, the process comprises encapsulating or coating an animal feed ingredient, the process comprising mixing an emulsifier with a coating agent, to form a coating mixture, and placing the coating mixture over an animal feed ingredient particle, thus encapsulating or coating the animal feed ingredient.

In an aspect of the disclosure, a process mixing and heating an emulsifier with a hydrogenated vegetable oil, thereby producing a coating mixture, and mixing the coating mixture with amino acid particles to form a slurry. The process may further comprise heating the slurry to form a product melt. The process may further comprise depositing the product melt with a pastillator as substantially uniform and dust free pastille granules onto a belt cooler.

### BRIEF DESCRIPTION OF THE DRAWINGS

A more complete understanding of the present invention and the advantages thereof may be acquired by referring to the following description in consideration of the accompanying drawings, in which like reference numbers indicate like features, and wherein:

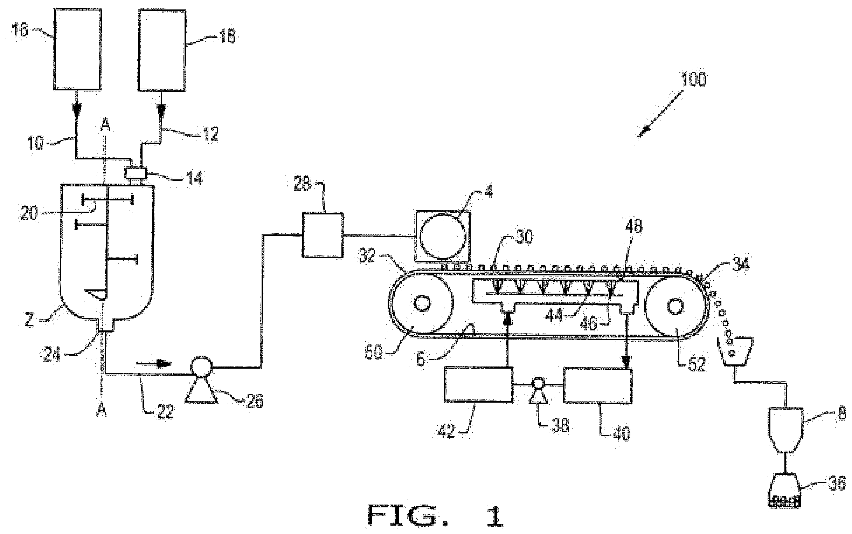

FIG. 1 illustrates a flow diagram of a process according to aspects of the disclosure.

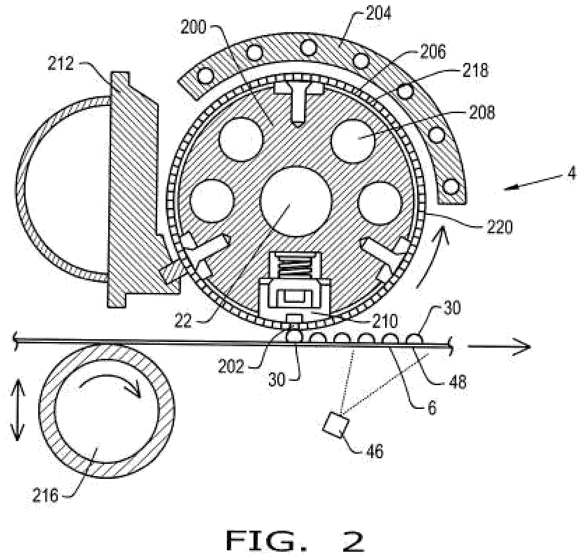

FIG. 2 illustrates further aspects of the pastillator that is shown more generally in FIG. 1.

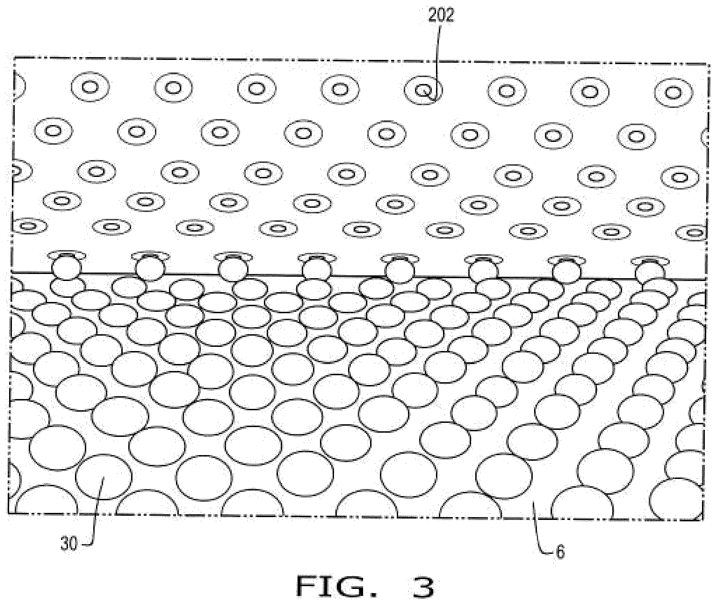

FIG. 3 illustrates placement of product from openings in the pastillator onto a cooling belt that is shown more generally in FIG. 1.

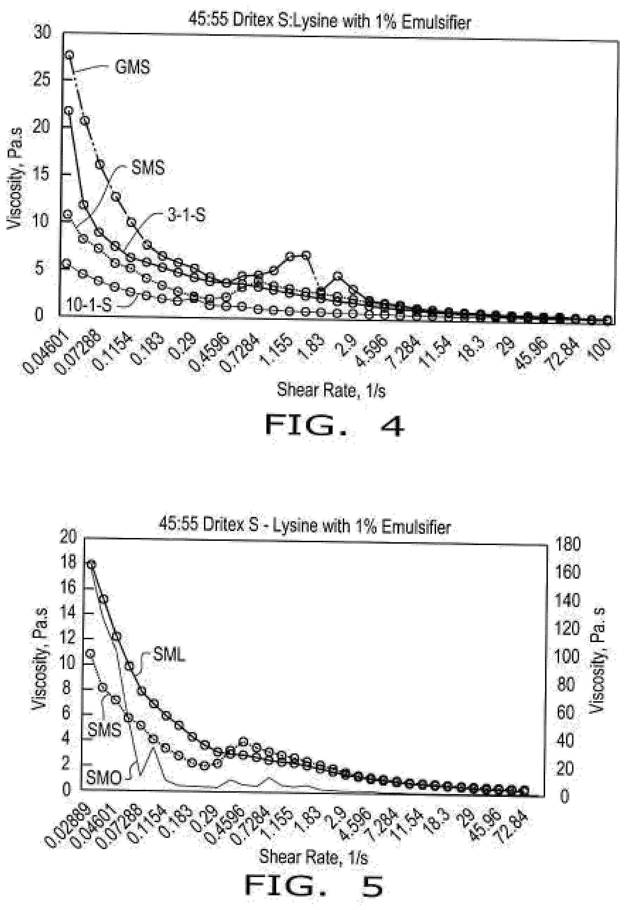

FIG. 4 illustrates viscosity curves of compositions comprising encapsulated lysine as a function of shear rate in the presence of emulsifier (GMS - glycerol monostearate, SMS - sorbitan monostearate, 3-1-S - triglycerol monostearate, and 10-1-S - decaglycerol monostearate) at 85°C according to aspects of the disclosure, wherein the compositions comprise a 45:55 blend of hydrogenated soy oil and lysine with 1% emulsifier.
FIG. 5 illustrates viscosity curves of compositions comprising encapsulated lysine as a function of shear rate in the presence of emulsifier (SMS - sorbitan monostearate, SML - sorbitan monolaurate, and SMO - sorbitan monooleate) at 85°C according to aspects of the disclosure, wherein the compositions comprise a 45:55 blend of hydrogenated soy oil and lysine with 1% emulsifier.

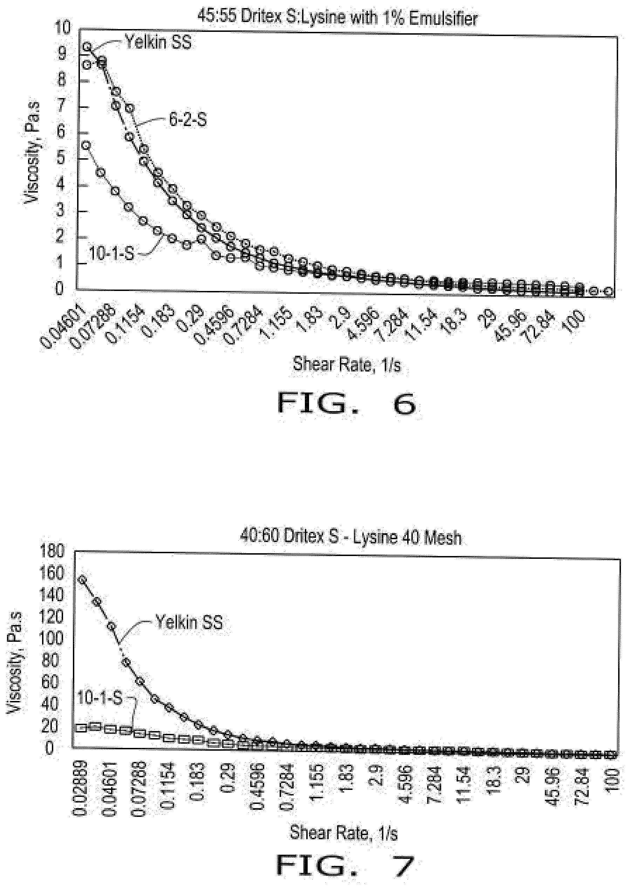

FIG. 6 illustrates viscosity curves of compositions comprising encapsulated lysine as a function of shear rate in the presence of emulsifier (10-1-S - decaglycerol monostearate, Yelkin^{®} SS Lecithin, by Archer Daniels Midland Company, or 6-2-S - hexaglycerol monostearate) at 85°C according to aspects of the disclosure, wherein the compositions comprise a 45:55 blend of hydrogenated soy oil and lysine with 1% emulsifier.
FIG. 7 illustrates viscosity curves of compositions comprising encapsulated lysine as a function of shear rate in the presence of emulsifier (Yelkin^{®} SS Lecithin, by Archer Daniels Midland Company, or 10-1-S - decaglycerol monostearate) at 85°C according to aspects of the disclosure, wherein the compositions comprise a 40:60 blend of hydrogenated soy oil and lysine with 1% emulsifier, and wherein lysine HCL was screened through a 40 mesh screen.

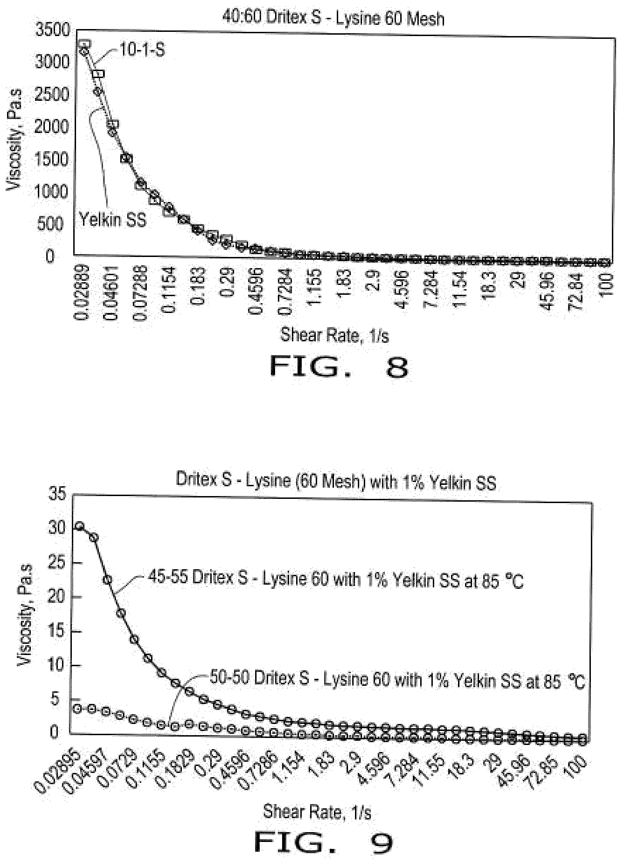

FIG. 8 illustrates viscosity curves of compositions comprising encapsulated lysine as a function of shear rate in the presence of emulsifier (Yelkin^{®} SS Lecithin, by Archer Daniels Midland Company, or 10-1-S - decaglycerol monostearate) at 85°C according to aspects of the disclosure, wherein the compositions comprise a 40:60 blend of hydrogenated soy oil and lysine with 1% emulsifier, and wherein lysine HCL was screened through a 60 mesh screen.
FIG. 9 illustrates viscosity curves of compositions comprising encapsulated lysine as a function of shear rate in the presence of emulsifier (Yelkin^{®} SS Lecithin, by Archer Daniels Midland Company) at 85°C according to aspects of the disclosure, wherein the compositions comprise either a 50:50 blend or a 45:55 blend of hydrogenated soy oil and lysine with 1% emulsifier, and wherein lysine HCL was screened through a 60 mesh screen.

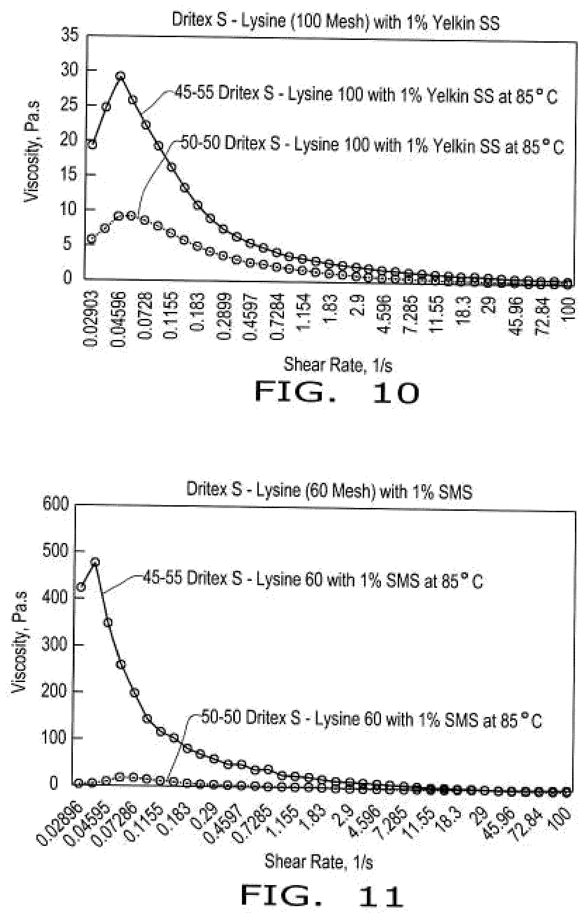

FIG. 10 illustrates viscosity curves of compositions comprising encapsulated lysine as a function of shear rate in the presence of emulsifier (Yelkin^{®} SS Lecithin, by Archer Daniels Midland Company) at 85°C according to aspects of the disclosure, wherein the compositions comprise either a 50:50 blend or a 45:55 blend of hydrogenated soy oil and lysine with 1% emulsifier, and wherein lysine HCL was screened through a 100 mesh screen.
FIG. 11 illustrates viscosity curves of compositions comprising encapsulated lysine as a function of shear rate in the presence of emulsifier (SMS - sorbitan monostearate) at 85°C according to aspects of the disclosure, wherein the compositions comprise either a 50:50 blend or a 45:55 blend of hydrogenated soy oil and lysine with 1% emulsifier, and wherein lysine HCL was screened through a 60 mesh screen.

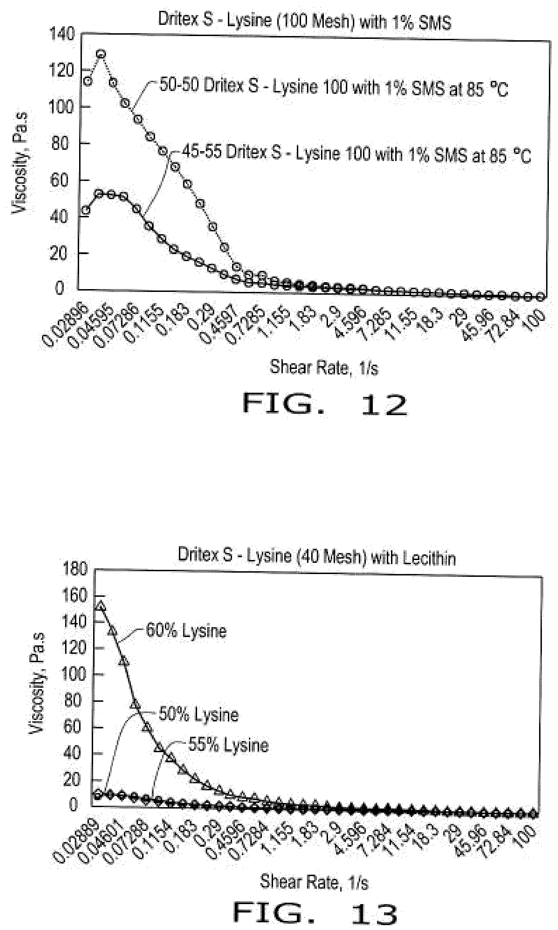

FIG. 12 illustrates viscosity curves of compositions comprising encapsulated lysine as a function of shear rate in the presence of emulsifier (SMS - sorbitan monostearate) at 85°C according to aspects of the disclosure, wherein the compositions comprise either a 50:50 blend or a 45:55 blend of hydrogenated soy oil and lysine with 1% emulsifier, and wherein lysine HCL was screened through a 100 mesh screen.
FIG. 13 illustrates viscosity curves of compositions comprising encapsulated lysine as a function of shear rate in the presence of emulsifier (lecithin) at 85°C according to aspects of the disclosure, wherein the compositions comprise either a 50:50 blend or a 45:55 blend or a 40:60 blend of hydrogenated soy oil and lysine with 1% emulsifier, and wherein lysine HCL was screened through a 40 mesh screen.

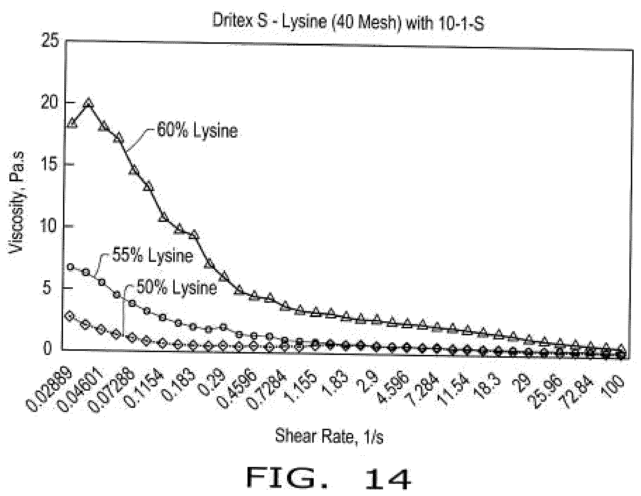

FIG. 14 illustrates viscosity curves of compositions comprising encapsulated lysine as a function of shear rate in the presence of emulsifier (10-1-S - decaglycerol monostearate) at 85°C according to aspects of the disclosure, wherein the compositions comprise either a 50:50 blend or a 45:55 blend or a 40:60 blend of hydrogenated soy oil and lysine with 1% emulsifier, and wherein lysine HCL was screened through a 40 mesh screen.

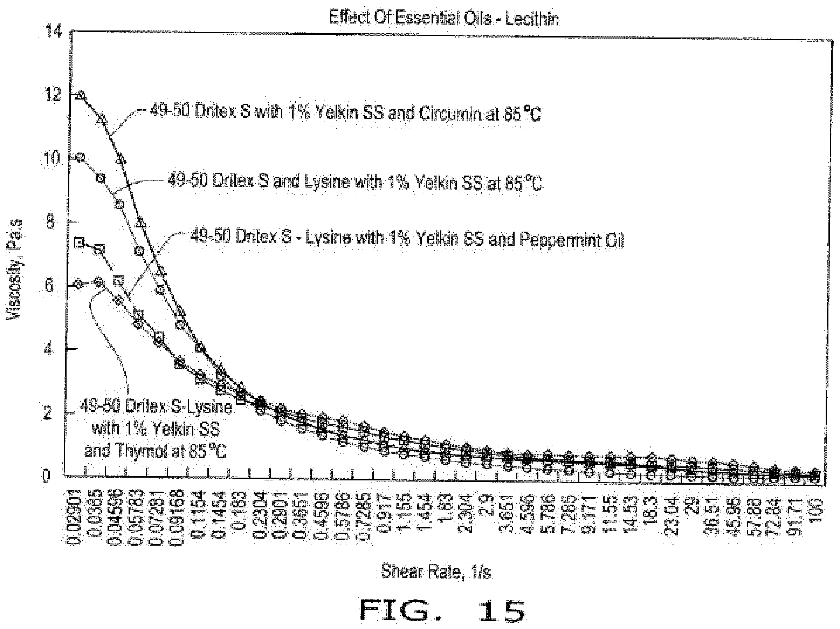

FIG. 15 illustrates viscosity curves of compositions comprising encapsulated lysine as a function of shear rate in the presence of emulsifier (Yelkin^{®} SS Lecithin, by Archer Daniels Midland Company, or Yelkin^{®} SS Lecithin with phytonutrient essential oils, i.e., thymol, or peppermint oil, or curcumin) at 85°C according to aspects of the disclosure, wherein the compositions comprise either a 49:50 blend of hydrogenated soy oil and lysine with 1% emulsifier and phytonutrient essential oils at 1% wt:wt, and wherein lysine HCL was screened through a 40 mesh screen.

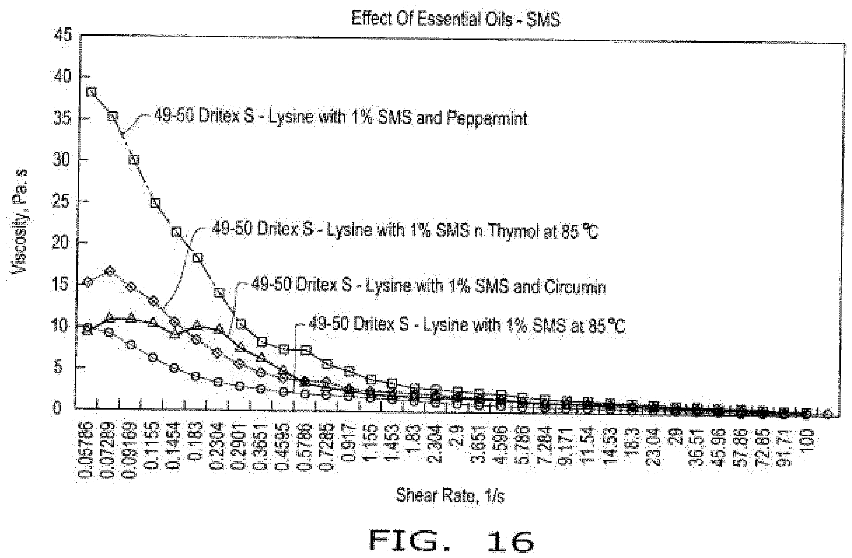

FIG. 16 illustrates viscosity curves of compositions comprising encapsulated lysine as a function of shear rate in the presence of emulsifier (SMS - sorbitan monostearate, or SMS - sorbitan monostearate with phytonutrient essential oils, i.e., thymol, or peppermint oil, or curcumin) at 85°C according to aspects of the disclosure, wherein the compositions comprise either a 49:50 blend of hydrogenated soy oil and lysine with 1% emulsifier and phytonutrient essential oils at 1% wt:wt, and wherein lysine HCL was screened through a 40 mesh screen.

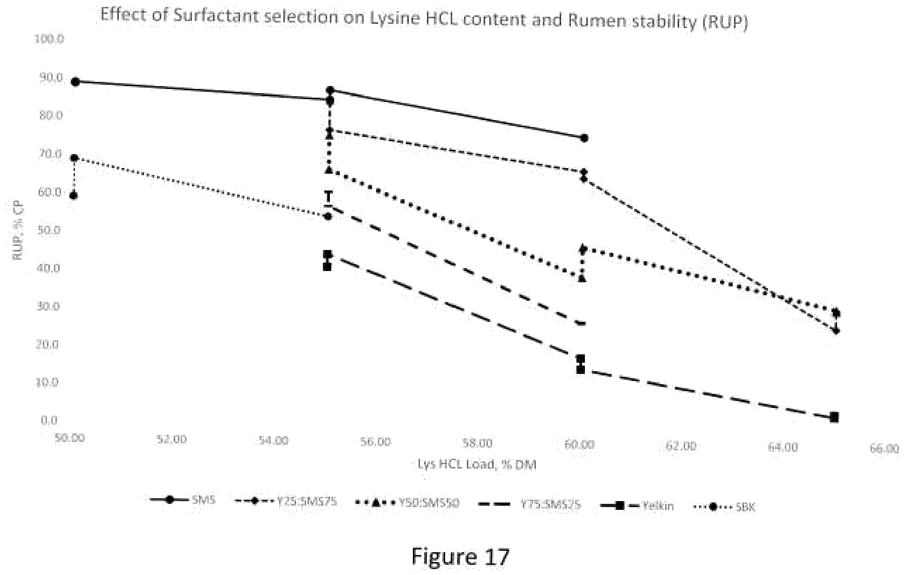

FIG. 17 shows the effect of the emulsifier/surfactant selection on Lysine HCL content and rumen stability (RUP).

### DETAILED DESCRIPTION

Many conventional coating compositions incorporate lipids or fatty acids as hydrophobic and nutritionally acceptable materials to provide a base of resistance to the aqueous environment of the rumen. The challenge faced is that amino acids present as dry solids within the formulation have different melt points and densities from that of a lipid. The solubility differences based on the extreme hydrophilic and hydrophobic properties of amino acids and the lipids can often lead to phase separation of the slurries when blended together in a molten state. Such phase separations can occur not just in the bulk phase but also in the small micro domains of fat crystal network. Amino acids can be included in formulations either as salts incorporating the physical properties of particle distribution or as "free" amino acids often within a water solution enhancing consideration of hydrophobic and hydrophilic interaction. The separation of ingredients within the matrix can cause inconsistency within the final product and a reduced level of protection from the rumen environment. In an aspect of the disclosure, the amino acid may be an amino acid that is beneficial to a ruminant animal when added to the diet of the animal, including but not limited to lysine, methionine, histidine, choline, and combinations of any thereof.

In an aspect of the present disclosure, new techniques are provided that overcome challenges and limitations of conventional approaches. Experiments were designed and carried out that tested certain characteristics of solid particles, emulsifiers, lipids and rheological properties of slurries prepared using pastillation processing. Surprisingly, it was discovered that when rheology parameters are well controlled, a high percentage of solids can be incorporated in the slurry or product melt when pastillation/deposition processing was practiced.

In an aspect of the disclosure, slurries in fluid state for manufacture of uniform pastilles meeting target specifications are provided. A more precise understanding of rheology enabled selection of compositions comprising an amino acid, lipid and emulsifier (adjusting for other additives, if desirable).

The viscosity of a slurry increases with solids content and fineness of incorporated solids (i.e. amino acid). Inclusion of an emulsifier facilitates the reduction of surface tension between the solid/liquid interface, which can lead to a decrease in viscosity. Further, the shear thinning property of a slurry allows for a higher inclusion of solids, which enables the slurry to be flowable during processing. Similarity in length of the fatty acid chain and degree of unsaturation between the "tail" of the emulsifier and the fat used can also improve function. It has been determined that in general, a larger "head" on the emulsifier allows a greater decrease in viscosity for a given solids concentration and particle size of solids. Common emulsifiers with favorable properties and that are used in food products for animals are sorbitan esters and lecithin (of which phosphatidylcholine is a component thereof). Phosphatidylcholine is generally considered to be a beneficial component of lecithin because it is rich in choline, a member of the B-vitamin complex involved in certain biological functions. The presence of emulsifiers in systems of extreme solubility parameters facilitates the lubrication of solids in a fat system by creating more nucleation sites. This allows the higher loading of hydrophilic solids in the fat slurry, creating more homogenous dispersion, and leading to more uniform pastilles in the process.

Lecithin contains two fatty acid chains with a large phosphate head group. Because of its favorable emulsification properties, lecithin is described in prior art related to compositions and methods of producing encapsulated products used in ruminant food. Lecithin, although a well-described food emulsifier, and commonly used in chocolate making to reduce the viscosity of sugar solids, does not hold good in improving the yield properties. Polyglycerol polyricinoleate (PGPR) is a polyglycerol ester-based emulsifier often used in conjunction with lecithin to offer both viscosity and yield properties and combinations of lecithin-PGPR are common in chocolate manufacturing because of synergistic interactions. Surprisingly, it was discovered that a single emulsifier, diglycerol ester, showed comparable functionality to lecithin. Structurally similar emulsifiers such as the phospholipid as well as the hexaglycerol distearate show similar functionality in controlling the rheaology parameters of the fat-lysine slurry. However, larger polygycerols (decaglycerol) were more effective than lecithin for enabling controlled viscosity within a high solids slurry.

FIG. 1 illustrates a flow diagram of a process according to aspects of the disclosure. As shown in FIG. 1, pastillation system 100 comprises mixing vessel 2, pastillator 4, belt cooler 6, and bagging station 8. Raw material 10 and coating mixture 12 can be added to mixing vessel 2 through upper opening 14 of mixing vessel 2. Raw material 10 may comprise an amino acid that is supplied from amino acid source 16. Coating mixture 12 may comprise an emulsifier and coating agent that are mixed and supplied from coating mixture source 18. Mixing arms 20 can be turned around a vertical axis A-A to mix raw material 10 and coating mixture 12 within mixing vessel 2 to form a slurry. Raw material 10 and coating mixture 12 may be heated in mixing vessel 2 to form product melt 22. For example, the raw material and coating mixture may be heated to greater than 10°C above the melting point of the fat. In alternative embodiments (not shown in FIG. 1), raw material 10 and coating mixture 12 may be heated together or separately before mixing in mixing vessel 2, or heated together after mixing in mixing vessel 2. Product melt 22 can exit mixing vessel 2 through lower opening 24 of mixing vessel 2. Product melt 22 can be pumped from mixing vessel 2 to pastillator 4 using pump 26. In an embodiment, product melt 22 can flow to filter 28 to remove undesirable large particles or coalescents so that a substantially uniform filtered product melt can exit filter 28 and conveyed or delivered to pastillator 4.

Pastillator 4 is configured to heat the filtered product melt to maintain the flow ability of product melt 22 and form a pastille comprising an encapsulated amino acid. Pastillator 4 is configured to deposit substantially uniform and dust free pastille granules 30 (comprising encapsulated amino acid particles) onto belt cooler 6 near proximal end 32 of belt cooler 6. In an embodiment, the substantially uniform and dust free pastille granules 30 may be substantially in the shape of a half-sphere. In another embodiment, the substantially uniform and dust free pastille granules may have a substantially pyramidal shape (similar to a chocolate chip shape). In one embodiment, a pastille granule has an aspect ratio (diameter: height) of 1.5 to 2.5, about 1.7, or about 2.0, in a shape similar to a half-sphere. In another embodiment, the substantially uniform and dust free pastille granules may be substantially flat-sided spheres (similar to a hockey puck shape). Pastillator 4 may be configured to produce pastille sizes of desired size, e.g., ranging from 1 to 25 mm in diameter (when looking down on the pastille granules after being deposited onto belt cooler 6. Pastille granules 30 may be collected from distal end 34 of belt cooler 6 and conveyed to bagging station 8, where pastille granules can be placed in bag 36. Pastillator 4 can be operated continuously for long periods of time. Water can be pumped by cooling water pump 38 from water tank 40 to chiller 42 and then sent to cooling water sprayers 44 comprising spray nozzles 46. Cooling water can be sprayed by sprayers 44 through spray nozzles 46 to bottom interface 48 of belt cooler 6, and thus provide cooling to belt cooler 6, and pastille granules 30 on belt cooler 6. After being sprayed, the water can be recycled back to water tank 40. Belt cooler 6 may rotate around belt rollers 50 and 52. As shown in FIG. 1, belt roller 50 is proximal to pastillator 4, and belt roller 52 is distal to pastillator 4.

The superior handling quality of the pastille granules allows for their use in further formulation of animal feeds, where homogeneous distribution of nutrients throughout the final feed mix is desired.

FIG. 2 illustrates further aspects of pastillator 4 that is shown more generally in FIG. 1. As shown in FIG. 2, pastillator 4 comprises product distribution pipe 200, heat shield 204, heated cylindrical stator 206, heating medium 208, and product distribution bar 210. Pastillator 4 may also comprise refeed bar 212. As previously mentioned, pastillator 4 is configured to deposit substantially uniform and dust free pastille granules 30 (comprising encapsulated amino acid) onto belt cooler 6. Filtered product melt supplied from filter 28 (shown in FIG. 1) is heated by pastillator 4 to maintain flow ability of product melt 22. Product melt 22 is deposited through product distribution openings 202 as substantially uniform and dust free pastille granules 30 (comprising encapsulated amino acid) onto belt cooler 6. Cooling water spray nozzles 46 are configured to spray cool water to interface 48 to cool belt cooler 6 and pastille granules 30 deposited on belt cooler 6. Belt cooler 6 can comprise belt rollers 216. Belt rollers 216 may be the same as or different from belt rollers 50 and 52. The vertical distance between belt cooler 6 and pastillator 4 can be adjusted by vertically moving rollers 216 in relation to pastillator 4.

Heated cylindrical stator 206 may comprise a hollow roller 218. Heated cylindrical stator 206 may comprise a perforated rotating shell 220 that turns concentrically around the stator, depositing drops of product melt 22 as pastille granules 30 across an operating width of the steel belt or belt cooler 6. A system of baffles and internal nozzles built into the heated cylindrical stator 206 provides a uniform pressure across the operating width of the belt cooler 6, providing an even flow through all holes or product distribution openings 202 of the perforated rotating shell 220. This ensures that each pastille granule 30 is of a uniform size, along a row of pastille granules 30 between one edge of the belt to the other.

The circumferential speed of pastillator 4 is synchronized with the speed of the belt so that drops are therefore deposited on the belt without deformation. Heat released during solidification and cooling is transferred by the stainless steel belt or belt cooler 6 to the cooling water sprayed underneath. This water is collected in a tank, e.g., tank 40, and returned to the water chilling system or chiller 42, and at no stage does water come into direct contact with the product or pastille granules 30. The design of an effective pastillation system takes into consideration a number of factors. For instance, the minimum diameter of a pastille depends on the diameter of the holes or product distribution openings 202 in rotating shell 220, the density and viscosity of the product itself, the surface tension and the mechanical acceleration applied to the droplet. Those skilled in the art will recognize that in accordance with the disclosure, the drops should be of sufficient weight and volume in order to be deposited onto the steel belt or belt cooler 6, and the distance between the outer rotating shell 220 and the steel belt can be adjusted to provide an efficient and process and desired pastille granules 30.

Those skilled in the art will recognize that in accordance with this disclosure appropriate process parameters and component configurations can be further refined using specially developed computer programs and/or test runs using the particular product to be processed.

FIG. 3 illustrates depositing of pastille granules 30 onto belt cooler 6. As shown in FIG. 3, pastille granules 30 are deposited onto belt cooler 6 through product distribution openings 202. Those skilled in the art having the benefit of this disclosure will recognize that suitable pin and/or needle structures may be used to convey pastille granules 30 through product distribution openings 202 onto belt cooler 6.

In one aspect, a product produced by any of the processes described herein is produced.

In another aspect, a pastillated granule comprises an amino acid, an emulsifier, and a coating agent. The pastillated granule is in a shape approximating a half-sphere having an aspect ratio (diameter/height) of 1.5 to 2.5.

The amino acid may be selected from the group consisting of lysine, histidine, methionine, choline, and combinations of any thereof. The emulsifier may be selected from the group consisting of lecithin, monoglyceride, sorbitan ester, polyglycerols, and combinations thereof. The coating agent may be selected from the group consisting of an oil, a fatty acid, and combinations thereof. The coating agent may be a hydrogenated vegetable oil. The pastillated granule may have a size of 2.2-5.0 mm or 2.2-3.5 mm. The amino acid may have a particle size of 50-120 mesh or 80-110 mesh. The amino acid may be present in the pastillated granule at 25-85% by weight, 25-75% by weight, or 35-75% by weight.

In another aspect, method of feeding an animal comprises mixing a pastillated granule produced as described herein with an animal feed ingredient to product an animal feed and feeding the animal feed to an animal. The animal may be a ruminant.

In a further aspect, a process of encapsulating amino acid particles includes mixing an emulsifier with a coating agent, thereby producing a coating mixture, mixing the coating mixture with an amino acid particle to form a slurry, forming pastilles with the slurry, and depositing the pastilles onto a belt. The process may further include heating the coating mixture and/or cooling the pastilles on the belt.

Other aspects of the process and encapsulated products of this disclosure are further described in connection with the following Examples.

### Example 1. Effects of lysine particle size and emulsifier usage on rumen integrity (viscosity as a distinguishing feature).

The following example demonstrates that viscosity as a distinguishing feature in accordance with aspects of the disclosure. A trial was undertaken to evaluate equipment and handling for prilling in a spray chilling process. The intent of these trials was to form prills of about 1 mm and evaluate rumen integrity (stability) as affected by lysine amount and particle size, and choice of emulsifier. Lysine HCl in dry powder form was included at 50% to the slurry. Lysine HCl was either milled recharge with a larger distribution of particle size or screened through a 40 mesh screen. Hydrogenated soy or palm oil made up the balance of the formula. During testing, 25 lb. slurry batches were formed with a spinning disk operating in a spray tower. Results are shown in Table 1.

| **Table 1. Effects of lysine particle size and emulsifier on prill integrity during rumen incubation** | | | | | | | |
|---|---|---|---|---|---|---|---|
| **Sample #** | **Lysine** | **Emulsifier** | **Lipid** | **% Emulsifier** | **> 16 Mesh (%)** | **< 30 Mesh (%)** | **DMR¹ (%)** |
| 1613901 | Milled < 100 Mesh | Alphadim 90 SBK | Dritex-S | 10% | 0.77 | 22.92 | 48.1 |
| 1613902 | Milled <100 Mesh | Alphadim 570 | Dritex-S | 10% | 1.57 | 16.74 | 50.4 |
| 1613903 | < 40 Mesh | Alphadim 90 SBK | Dritex-S | 5% | 5.52 | 13.37 | 51.5 |
| 1613904 | < 40 Mesh | Alphadim 570 | Dritex-S | 5% | 3.66 | 13.81 | 51.4 |
| 1613905 | Milled <100 Mesh | Alphadim 90 SBK | Dritex-PST | 5% | 1.47 | 16.77 | 48.9 |
| Control ( Commercial Encapsulated Product) | | | | | | | 87.3 |
| ¹ DMR = Dry Matter Recovery after 16 hours incubation in the rumens of lactating dairy cows | | | | | | | |

In this experiment, yield of acceptable particle size was low and rumen stability was poor compared with the commercial encapsulated product. Slurry mixing was poor and the - slurry was "gritty," particularly for the broader-spectrum coarser material (i.e. < 40 mesh lysine granules). Viscosity and flow were concerns when solids were greater than 50% and slurry separation was observed. A high load of emulsifier was required for the slurries to exhibit suitable flow with 50% solids for spray chilling. High emulsifier content can be detrimental to encapsulation. The hydration effect of the particle leads to a stable dispersion in an aqueous environment. However, the process in which the encapsulation is done is also an important parameter to form a rumen stable product.

### Example 2. Evaluation of lysine formulation among process methods (viscosity influences process method - thus allowing for control to improve product).

A series of investigations were undertaken to evaluate processing schemes (prilling, fluid bed coating, extrusion, and pastillation) and interactions of compositions with processing. Lysine hydrochloride (Lys HCL) of varying particle size profiles (unscreened Lys HCl and screened Lys HCl) were used in formulation. Slurries were formulated to contain 40 or 50% Lys HCl, and monoglyceride emulsifier (Alphadim^{®} 90 SBK, by Corbion) was added between 0.5 and 5% by weight of the formula and was heated around 20 degrees C above the melt point of the fat system. The balance of the material was a fully hydrogenated soybean oil. The coating process utilizes the fully hydrogenated soybean oil plus emulsifier sprayed onto the lysine granules. Samples of each prototype were evaluated for rumen stability after a 16 hours of incubation in the rumens of lactating cows. Results are shown in Table 2.

| **Table 2. Effects of composition and method of processing on integrity of prills** | | | | | | | |
|---|---|---|---|---|---|---|---|
| **Sample #** | **Method** | **Lysine Particle Size** | **% Emulsifier** | **% Lysine HCl** | **> 16 Mesh [1180 um] (%)** | **< 30 Mesh [600 um] (%)** | **DMR (%)** |
| 1618901 | Spray-chill | < 40 Mesh | 1.00% | 50 | 3.4 | 18.7 | 56 |
| 1618905 | Spray-chill | < 40 Mesh | 0.50% | 50 | 6.2 | 13.7 | 55 |
| 1618903 | Spray-chill | < 40 Mesh | 0.50% | 40 | 1.7 | 23.2 | 65 |
| 16347-6 | Fluid bed | 16-20 Mesh | 0.50% | 50 | 51.4 | 0.47 | 74 |
| 16347-7 | Fluid bed | Commercial | 0.50% | 50 | 59.5 | 1.29 | 79 |
| 16340-3 | Extrusion | < 40 Mesh | 0.50% | 50 | 98.7 | 0.28 | 80 |
| 1621801 | Pastillation | < 100 Mesh | 5.00% | 50 | 100 | 100 | 83 |
| 1621809 | Pastillation | < 60 Mesh | 5.00% | 50 | 100 | 100 | 74 |
| 1621805 | Pastillation | < 40 Mesh | 5.00% | 50 | 100 | 100 | 74 |
| 1619701 | Pastillation | < 40 Mesh | 0.50% | 50 | 100 | 100 | 98 |
| 1623101 | Pastillation | < 40 Mesh | 0.50% | 50 | 100 | 100 | 95 |
| DMR = recovery of dry weight after 16 hours rumen incubation in lactating dairy cows | | | | | | | |

Prototypes produced by spray chilling resulted in prills were more spherical as viscosity increased with somewhat larger particle size. Decreasing lysine content improved rumen stability. Extrusion provided flexibility in formulation of lysine suspensions and formation of particles, however, fracturing along particle edges appeared to compromise rumen integrity. Fluid bed processing resulted in rumen integrity superior to spray chilling and similar to extrusion.

Pastillation processing resulted in superior integrity of prills, particularly when particle size of Lys HCl was controlled at < 40 Mesh. It was discovered that viscosity could be adjusted sufficiently to enable pastillation of a high solids suspension with a pastille mean particle size greater than 2mm. A high amount of emulsifier in the composition did not improve rumen integrity of the pastille, and in fact a lesser concentration resulted in a more stable pastille. It was discovered that the functionality of the emulsifier and not the amount that drives the rheology properties when it comes to such high solids fat slurry systems. However, there is a significant tradeoff when it comes to process, composition, physical properties such as particle size, the rheology and rumen stability. This investigation revealed that controlling viscosity through solids particle size and level of emulsifier enables a high level of solids in the slurry which can be processed to produce pastilles exhibiting superior rumen integrity. The investigation revealed that various processing schemes may be used to produce solid particles with varying degrees of rumen integrity. It was concluded however, that pastillation processing appeared most promising of the investigated processing schemes. Furthermore, by precisely formulating compositions used in the processing, pastille integrity was greater than 95% after rumen incubation.

### Example 3. Functional additive inclusion in compositions further distinguish and contribute nourishment.

Animals incur various challenges in commercial feeding operations that may compromise health and wellness or reduce nourishment because of malabsorption or altered gastrointestinal function. Feed additives, and in particular naturally occurring phytonutrients found in botanical and plant extracts often are added to feeds to support digestive processes or favorably affect feed digestion and the immune system of animals. Additives are especially useful for animals producing high amounts of commercially valuable product, such as fluid milk or meat. An increased emphasis on reducing or eliminating sub-therapeutic antibiotic usage in animal feeds in favor of natural alternatives such as phytonutrients prompted investigations to explore whether phytonutrients could be added to compositions used in the encapsulation process.

In these investigations, compositions used in the pastillation processing were augmented with botanical extracts as a source of phytonutrients. Formulations contained 50% Lys HCl and 0.5% SMS emulsifier. Prototype materials were incubated in porous dacron bags for 16 hours in the rumens of lactating dairy cows to estimate integrity of the pastille.

Inclusion of a botanical extract in the suspension decreased rumen integrity of the pastille with more pronounced compromise of protein (lysine) integrity compared with dry weight integrity. These investigations demonstrated that incorporation of plant botanicals or essential oil extracts in the slurry suspensions require adjustment of the viscosity and rheological properties of the matrix to afford optimal protection of lysine. Because of the different solubility effects of essential oils in a triglyceride matrix, a more optimal emulsifier type and amount can provide a much stable encapsulated product with a higher percentage of protein recovery. In a combined product, the preferred composition may be formulated to release a certain amount of phytonutrient and some lysine in the rumen, with absolute dissolution occurring later in the gastrointestinal tract, thus affording multiple benefits depending on targeted bioactivity of the phytonutrient and benefits associated with proving soluble protein (lysine) to the rumen or lower gastrointestinal tract. Results are shown in Table 3.

**Table 3**

| **Ingredient** | **% added botanical** | **Dry Weight Recovery, %** | **Protein Recovery % of Protein** |
|---|---|---|---|
| 50% Lysine HCl | 0 | 96.9 | 84.0 |
| Capsaicin | 2.0 | 78.0 | 36.4 |
| Peppermint | 2.0 | 65.1 | 21.3 |
| Thymol | 1.0 | 86.1 | 55.4 |
| Tumeric & Piperine | 2.5 | 88.1 | 60.0 |
| Zinc & Thymol | 0.5 | 86.5 | 65.5 |

### Example 4. Effect of emulsifiers on rheological properties of lysine-lipid compositions (polyglycerols, also referred to as PGE's, are unique).

Emulsifiers are amphiphilic molecules that are ubiquitous and found in very diverse applications such as food, feed, personal care & cosmetics and pharmaceutical industries. Emulsifiers are very versatile and hence exploited for different functionalities such as wetting agent, emollient, solubilizer, dispersant, defoamer, crystal modifier, texturant, etc. In addition, emulsifiers can also modify the nucleation, crystal growth, and polymorphic transformation processes of fats not just in bulk but also in emulsion phase. This unique functionality has offered the food industry with a major breakthrough in customizing the fat systems for not only the saturated fat reduction but also for improving the shelf life and organoleptic properties.

Although most of the emulsifiers in general contribute in some form towards the fat crystal modification based on the size and type of the head group, the fatty acid chain, the solubility in fat etc. the emulsifiers can be categorized as crystal former or crystal breaker. The solubility of emulsifiers based on the similarities and dissimilarities in the fatty acid chain of the molecule, the concentration of the emulsifier, etc. contribute different functionalities to the fat system. When the hydrophobic fat has significant amount of the hydrophilic water soluble solid components, such as, sugar etc., the functionality of the emulsifier should be such that it lubricates the solids forming a much less viscous slurry/suspension. In aspect of the disclosure, appropriate emulsifiers can be identified based on the fat and the nature of dry solid, its particle size and stability.

In an aspect of the disclosure, a process step for lysine encapsulation was investigated using hydrogenated soy oil blended with Lys HCl, a water-soluble solid. The amount of lysine solids, the ratio of lipid to lysine, and concentration and type of emulsifier were shown to affect the rheology properties of blends processed to form pastilles or extruded products.

Further, a distinguishing feature of an emulsifier is the release properties of the lysine after processing. It was important to understand whether the emulsifier would affect the release of the encapsulated hydrophilic ingredients.

To address these questions, a blend of 45:55 hydrogenated soy oil (Dritex S, by Stratas Food, LLC) was made by melting the lipid in presence of an emulsifier at 1% (w/w) concentration and gradually adding the Lys HCl with stirring. The rheology measurements were performed using an AR-2000 Stress Controlled Rheometer from TA Instruments with concentric cylinder geometry with shear rate in the range of 0.029-100 rad/sec at 85°C.

FIG. 4 shows the viscosity curves as a function of shear rate in presence of emulsifiers GMS-Glycerol monostearate; SMS-Sorbitan monostearate; 3-1-S - Triglycerol monostearate and 10-1-S - Decaglycerol monostearate at 85C. The particle size of Lysine was <40 mesh. The chemical formulas of sorbitan monostearate (SMS) and glycerol monostearate (GMS) are shown below. Those skilled in the art will recognize that triglycerol monostearate will have three glycerol groups and decaglycerol monostearate will have ten glycerol groups instead of the single glycerol group shown below for glycerol and sorbitan monostearate.

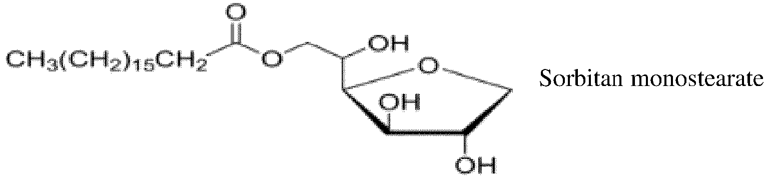

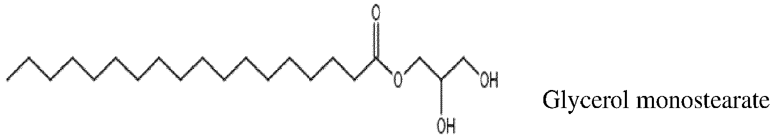

In comparison to the monostearate possessing, a glycerol head group with the sorbitan ester of stearic acid was shown more effective in lowering the viscosity of the lipid-lysine blend. Similarly, the decaglycerol of stearic acid ester is more effective than the corresponding triglycerol ester. The common functionality of the head group comes from its bulkiness. The larger the head group the fatty acid chain orients towards the solid/liquid interface and facilitates the lubrication of the solid particles resulting in fluidizing the slurry leading to low viscosity properties. It is the particle size distribution of the solid particles in the fat continuous phase that drives the rheology functionality.

FIG. 5 shows the effect of the fatty acid tail group of the emulsifier with similar head group. The sorbitan monostearate (SMS), sorbitan monooleate (SMO) and sorbitan monolaurate (SML) both have the common sorbitan head group with change in the fatty acid chain length of the hydrophobic moiety. The lower viscosity of the lysine-lipid slurry with SMS compared to SML is indicative of the fact that functionality of the emulsifier is relatively higher when the fatty acid chains are more similar to the lipid system. For the same reasons the SMO gave much higher viscosity than any of the other emulsifiers with similar sorbitan ring.

Soy lecithin is a phospholipid with two fatty acid chains and a larger polar phosphate head group, and is shown in the following formula:

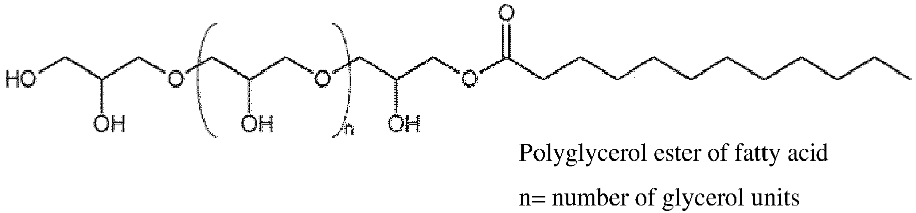

As previously noted, phosphatidylcholine is generally considered to be a beneficial component of lecithin because it is rich in choline, a member of the B-vitamin complex involved in certain biological functions. Phosphatidylcholine is shown in the following formula:

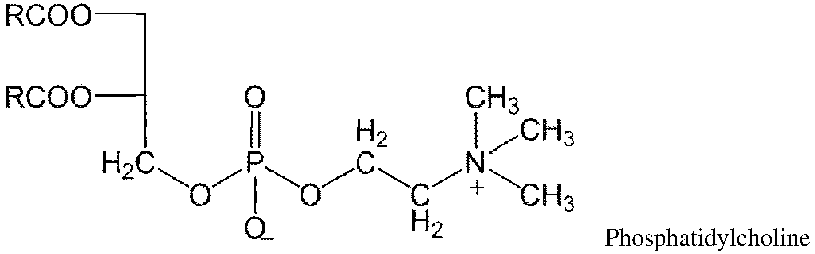

Lecithin is a well-known food emulsifier. For example, lecithin is commonly used in chocolate making to reduce the viscosity of sugar solids. Lecithin, however, does not hold well in improving the yield properties. Polyglycerol polyricinoleate (PGPR) is a polyglycerol ester based emulsifier used in conjunction with lecithin to offer both viscosity and yield properties in chocolate with its synergistic interactions.

Aspects of the disclosure are further shown in FIGs. 6 through 16.

FIG. 6 illustrates viscosity curves of compositions comprising encapsulated lysine as a function of shear rate in the presence of emulsifier (10-1-S - decaglycerol monostearate, Yelkin^{®} SS Lecithin, by Archer Daniels Midland Company, or 6-2-S - hexaglycerol monostearate) at 85 C according to aspects of the disclosure, wherein the compositions comprise a 45:55 blend of hydrogenated soy oil and lysine with 1% emulsifier.

FIG. 7 illustrates viscosity curves of compositions comprising encapsulated lysine as a function of shear rate in the presence of emulsifier (Yelkin^{®} SS Lecithin, by Archer Daniels Midland Company, or 10-1-S - decaglycerol monostearate) at 85 C according to aspects of the disclosure, wherein the compositions comprise a 40:60 blend of hydrogenated soy oil and lysine with 1% emulsifier, and wherein lysine HCL was screened through a 40 mesh screen.

FIG. 8 illustrates viscosity curves of compositions comprising encapsulated lysine as a function of shear rate in the presence of emulsifier (Yelkin^{®} SS Lecithin, by Archer Daniels Midland Company, or 10-1-S - decaglycerol monostearate) at 85 C according to aspects of the disclosure, wherein the compositions comprise a 40:60 blend of hydrogenated soy oil and lysine with 1% emulsifier, and wherein lysine HCL was screened through a 60 mesh screen.

In case of lysine-lipid slurry blend, the viscosity data with lecithin was compared with polyglycerol ester emulsifier 6-2-S (Hexaglycerol distearate). Both lecithin and 6-2-S have two fatty acid chains and head group (phosphate vs hexaglycerol) and are very similar in functionality showing similar effect of diglyceride. When two of the polyglycerols (PGE's) 6-2-S and 10-1-S are compared the larger head group of decaglycerol dominates the functionality of lowering the viscosity. In accordance with the teachings of this disclosure, those skilled in the art will recognize that using an emulsifier with a good balance in the size and type of hydrophilic and hydrophobic moiety can deliver a multifold improvement in maximizing the loading of the dry solid load in a given matrix system.

Those skilled in the art will recognize that features of the disclosure may be modified to achieve customized solutions for a given loading/particle size distribution of dry solids in a lipid system based on process needs.

The effect of lecithin (e.g., Yelkin^{®} SS Lecithin) and sorbitan monostearate (SMS) at 1% concentration in rheology parameters in a slurry at ratios of 50:50 and 45:55 of hydrogenated soy oil (Dritex S) and Lysine HCl (60 mesh and 100 mesh) are illustrated in FIGs. 9-12.

FIG. 9 illustrates viscosity curves of compositions comprising encapsulated lysine as a function of shear rate in the presence of emulsifier (Yelkin^{®} SS Lecithin, by Archer Daniels Midland Company) at 85 C according to aspects of the disclosure, wherein the compositions comprise either a 50:50 blend or a 45:55 blend of hydrogenated soy oil and lysine with 1% emulsifier, and wherein lysine HCL was screened through a 60 mesh screen.

FIG. 10 illustrates viscosity curves of compositions comprising encapsulated lysine as a function of shear rate in the presence of emulsifier (Yelkin^{®} SS Lecithin, by Archer Daniels Midland Company) at 85 C according to aspects of the disclosure, wherein the compositions comprise either a 50:50 blend or a 45:55 blend of hydrogenated soy oil and lysine with 1% emulsifier, and wherein lysine HCL was screened through a 100 mesh screen.

FIG. 11 illustrates viscosity curves of compositions comprising encapsulated lysine as a function of shear rate in the presence of emulsifier (SMS - sorbitan monostearate) at 85 C according to aspects of the disclosure, wherein the compositions comprise either a 50:50 blend or a 45:55 blend of hydrogenated soy oil and lysine with 1% emulsifier, and wherein lysine HCL was screened through a 60 mesh screen.

FIG. 12 illustrates viscosity curves of compositions comprising encapsulated lysine as a function of shear rate in the presence of emulsifier (SMS - sorbitan monostearate) at 85 C according to aspects of the disclosure, wherein the compositions comprise either a 50:50 blend or a 45:55 blend of hydrogenated soy oil and lysine with 1% emulsifier, and wherein lysine HCL was screened through a 100 mesh screen.

In the process of understanding the rheology parameters for the encapsulation process as disclosed herein, the hydrogenated soy oil and Lysine HCl slurries at different ratios of 50:50, 45:55, and 40:60 with 40 mesh Lysine HCl were prepared and the effect of two different emulsifiers lecithin (Yelkin^{®} SS Lecithin) and decaglycerol monostearate (10-1-S) were compared as shown in FIGs. 13-14.

FIG. 13 illustrates viscosity curves of compositions comprising encapsulated lysine as a function of shear rate in the presence of emulsifier (lecithin) at 85 C according to aspects of the disclosure, wherein the compositions comprise either a 50:50 blend or a 45:55 blend or a 40:60 blend of hydrogenated soy oil and lysine with 1% emulsifier, and wherein lysine HCL was screened through a 40 mesh screen.

FIG. 14 illustrates viscosity curves of compositions comprising encapsulated lysine as a function of shear rate in the presence of emulsifier (10-1-S - decaglycerol monostearate) at 85 C according to aspects of the disclosure, wherein the compositions comprise either a 50:50 blend or a 45:55 blend or a 40:60 blend of hydrogenated soy oil and lysine with 1% emulsifier, and wherein lysine HCL was screened through a 40 mesh screen.

When Dritex S -Lysine blends were made at ratios of 50:50 and 45:55 with different particle size of lysine, the absolute viscosities were very different even based on the choice of emulsifier. The viscosity profile of lecithin was very independent on the particle size of lecithin with higher range of viscosity of only 30Pa.s. However, the sorbitan monostearate has relatively higher viscosity at low shear in the range of 120Pa.s.

The Dritex S blend with 40 mesh lysine in presence of PGE 10-1-S was much lower than lecithin. The effectiveness of emulsifier can be ranked as 10-1-S>Lecithin >SMS. In accordance with the teachings of this disclosure, those skilled in the art will recognize that the overall functionality will be based on the choice of particle size of dry solids, the target loading, the fat system, its ratio and the emulsifier type.

FIG. 15 illustrates viscosity curves of compositions comprising encapsulated lysine as a function of shear rate in the presence of emulsifier (Yelkin^{®} SS Lecithin, by Archer Daniels Midland Company, or Yelkin^{®} SS Lecithin with phytonutrient essential oils, i.e., thymol, or peppermint oil, or curcumin) at 85 C according to aspects of the disclosure, wherein the compositions comprise either a 49:50 blend of hydrogenated soy oil and lysine with 1% emulsifier and phytonutrient essential oils at 1% wt:wt, and wherein lysine HCL was screened through a 40 mesh screen.

FIG. 16 illustrates viscosity curves of compositions comprising encapsulated lysine as a function of shear rate in the presence of emulsifier (SMS - sorbitan monostearate, or SMS - sorbitan monostearate with phytonutrient essential oils, i.e., thymol, or peppermint oil, or curcumin) at 85 C according to aspects of the disclosure, wherein the compositions comprise either a 49:50 blend of hydrogenated soy oil and lysine with 1% emulsifier and phytonutrient essential oils at 1% wt:wt, and wherein lysine HCL was screened through a 40 mesh screen.

When phytonutrient essential oils were added at low concentrations (1% wt:wt) to Dritex S-Lysine (40 mesh) at a 49:50 ratio with 1% Yelkin SS (lecithin), a significant change in viscosity profile was observed. In accordance with the teachings of this disclosure, those skilled in the art will recognize that rheological properties are uniquely affected by selection of essential oil, and that features of disclosure can be adjusted to fine-tune compositions and benefit material handling and subsequent encapsulation process.

The sorbitan monostearate (SMS) is more effective for curcumin and thymol as phytonutrient, whereas lecithin is more effective for peppermint oil as phytonutrient. In accordance with the teachings of this disclosure, those skilled in the art will recognize that the type of emulsifier can play a major role in tuning properties of a given composition in a process for more customized solutions.

The herein disclosed investigations demonstrate that rheology of the lysine-lipid system is affected by particle size of dry solids, the target loading, the lipid system, its ratio and the type of emulsifier. Adjustment of particle size and emulsifier (or combinations of emulsifiers) such as the PGE's 6-2-S and 10-1-may allow maximal inclusion of dry solids, perhaps to 60-65% (e.g., in the case of lysine) or 65-70% (in the case of histidine), or alternately use of a broader profile of particle distribution than otherwise practiced, especially as adjusted for rheology and desired final size of pastille. Particle size of the amino acid such as lysine affects the distribution of the liquid triglyceride coating. In case of very fine solids, the liquid system has to overcome the particle-particle interaction of the fine solids to provide good flow and coating characteristics. If the particle size distribution is larger, more uniform coating of the fat system is possible. However, when the particle size is much finer, there is a greater possibility of the formation of larger aggregates that retard the flow properties of the fat-lysine slurry. The packing density of the larger particle size solids allows for liquid triglyceride with the emulsifier to penetrate the packed system more uniformly than what is expected from very fine solids. Interaction with the properties of the botanical components would then modify the needed content and choice of emulsifier system. Those skilled in the art will recognized that in accordance with this disclosure, precise compositions can be formulated that are favorable for manufacturing processing, while also providing utility in the animal.

### Example 5. Manufacture of lysine pastilles by pastillation processing

Lysine pastilles were produced in a pilot scale facility substantially as shown in FIGs. 1 through 3 to investigate compositions and pastillation manufacturing when practiced in a continuous operation.

Lys HCl was screened on a rotex screener fitted with 40, 60, or 100 mesh screens to facilitate evaluation of solid particle size at 40 - 60% addition of Lys HCl. Monoglycerides (Alphadim 90 SBK), sorbitan mono-stearate (SMS), lecithin emulsifiers, or combinations were studied at 1% addition. Prototypes materials were evaluated for integrity by incubation in porous dacron bags for 16 hours in the rumens of lactating dairy cows. It was discovered that smaller diameter pastilles could be manufactured more readily using finer-particle lysine (<60 mesh), as the large particles in the <40 mesh resulted in segregation of the solids without agitation in the slurry feed line prior to the pastillator due to density differences between the solid lysine particle and the lipids. In addition, the larger particles in the <40 mesh clogged the seal bar/nozzles on the pastillator during starting and stopping during processing that will likely prevent a continuous process. Lecithin appeared to decrease rumen integrity; however, it was observed that agitation of the slurry before pastillation may have trapped air in the suspension, thus destabilizing the pastille and causing loss of pastille integrity. Entrapped air in the pastilles can result in relatively porous material and act as capillaries when subjected to aqueous environments, such as the rumen. Results are shown in Table 4.

| **Table 4. Characteristics of lysine pastille** | | | | | | | | |
|---|---|---|---|---|---|---|---|---|
| **Sample** | **Emulsifier** | **Lysine** | **% Lys HCl** | **Mean Pastille Diameter (mm)** | **Mean Pastille Height (mm)** | **% Protein** | **DMR¹ (%)** | **RUP, % CP** |
| 17010-2 | 90 SBK | < 40 Mesh | 40% | 5.34 | 2.86 | 38.9 | 96.5 | 87.8 |
| 17010-3-1 | 90 SBK | < 40 Mesh | 45% | 5.34 | 2.86 | 44.2 | 95.3 | 86.2 |
| 17010-4-3 | 90 SBK | < 40 Mesh | 50% | 5.10 | 2.90 | 47.0 | 90.2 | 81.1 |
| 17010-6 | 90 SBK | < 40 Mesh | 50% | 5.35 | 2.79 | 47.5 | 92.3 | 83.0 |
| 17010-9-1 | 90 SBK | < 40 Mesh | 50% | 3.68 | 2.43 | 46.3 | 89.7 | 76.0 |
| 17128-2-4 | Yelkin SS | <40 Mesh | 50% | 3.78 | 2.21 | 50.9 | 87.8 | 52.5 |
| 17128-6 | 90 SBK | < 40 Mesh | 50% | - | - | 48.8 | 94.4 | 76.2 |
| 17128-7 | 90 SBK | <60 Mesh | 50% | 5.33 | 2.55 | 47.6 | 96.7 | 87.1 |
| 17128-8 | SMS | <60 Mesh | 50% | 3.63 | 2.29 | 47.9 | 95.1 | 82.3 |
| 17128-3 | Yelkin SS | <100 Mesh | 50% | 3.41 | 2.14 | 48.6 | 89.1 | 53.9 |
| 17128-4 | Yelkin SS | <100 Mesh | 55% | 4.66 | 2.64 | 52.4 | 86.4 | 54.6 |
| ¹ DMR = Dry Matter Recovery, RUP = Rumen Undegraded Protein as a proportion of total protein (N*6.25) | | | | | | | | |

### Example 6. Effect of pastillated granules on rumen stability

Lysine pastilles were produced substantially as shown in FIGs. 1 through 3. The compositions contained 1% lecithin, 49% hydrogenated soybean oil, and 50% Lys HCl.

The Lys HCl was milled and screened on a rotex screener fitted with 60 or 100 mesh screens to facilitate evaluation of solid particle size. Pastillated granules were collected from batch sizes of approximately 45 kg and the formed pastilles were evaluated for particle size distribution by sieving through a vibrating sifter (Sweco) fitted with 6 screens.

The integrity of the pastilled granules was determined by incubation in porous dacron bags for 16 hours in the rumens of lactating dairy cows. The material that remained after incubation in the rumen was exposed in an *in vitro* assay to a buffered solution of enzymes mimicking intestinal fluid. The results of the *in vitro* assay are reported as estimated intestinal release. The estimated metabolizable Lys (MP Lys) amount per 100 g of pastillated granule was calculated using the equation: g of MP Lysine/100 g of product = % Lys x % stability x release. The results are shown in Table 5.

**Table 5.**

| Sample | Lys, mesh size | Pastille size range, mm | % in size range | % Lys | Rumen stability, % of lys | Intestinal Release, % | MP Lys, g/100 g of product |
|---|---|---|---|---|---|---|---|
| 18205-5 | 100 | 2.4-2.8 | 92 | 37.0 | 74 | 94 | 25.6 |
| 18205-1 | 100 | 2.8-3.4 | 92 | 37.5 | 79 | 87 | 25.6 |
| 18205-3 | 100 | 3.4-4.0 | 87 | 38.3 | 83 | 71 | 22.7 |
| 18205-2 | 60 | 2.8-3.4 | 95 | 35.7 | 74 | 55 | 14.4 |
| 18205-4 | 60 | 4.0-4.75 | 85 | 37.1 | 78 | 49 | 14.3 |

The % protection (stability) of lysine in the rumen was largely unaffected by the mesh size of the Lys in the pastillated granule or the size of the postulated granule. However, the estimated % intestinal release was superior when the finer mesh Lys was used, as 100 mesh Lys averaged 84% intestinal release whereas 60 mesh Lys averaged 52% release. The results indicate that 100 mesh vs 60 mesh Lys in the composition resulted in superior MP Lys (24.6 vs 14.4 g, respectively). A further discovery was that within the preferred Lys mesh size of 100 mesh Lys, a smaller diameter pastille (2.4-2.8; 2.8-3.4 mm) resulted in superior MP Lys compared to the larger diameter pastille (3.4-4.0 mm). The smaller pastilles (2.4 to 3.4 mm) showed improved MP Lys over larger pastilles (3.4-4.0 mm) because of better % intestinal release for the smaller pastilles.

### Example 7. Processing methods to produce pastillated lysine.

Lysine pastilles were produced substantially as shown in FIGs. 1 through 3. Batches of approximately 45 kg were made, with each batch having the same composition. The composition included 1% lecithin, 49% hydrogenated soybean oil, and 50% Lys HCl. The Lys used in the composition was milled through a 100 mesh screen and laser diffraction was used to determine the size classes (µM) of the milled Lys. 90% of the milled lysine was < 125 µM and the median size was approximately 50 µM. Each batch of the 45 kg pastillated granules was retained as a unique lot. The lots were subjected to screening to determine particle size distribution using a Sweco fitted with 6 screens. Lots were subdivided based upon screening into pastilles falling within the range of 2.4-2.8 mm and 2.8 to 3.4 mm. Certain sub-lots were selected for hand-held micrometer measurements to assess pastille particle size (n = 15 samples per lot selected).

Pastillated granules were further subjected to imaging technology to determine the size of the lysine granules found in the pastillated granules. Randomly selected pastilles from each sub-lot were sectioned and placed cut side face up on a carbon spot. Samples were imaged using a scanning electron microscope operated with back scatter comp, aperture 1, 10 mm working distance, 15 kV and 50x magnification.

Pastillated granules were subjected to rumen stability and *in vitro* simulated intestinal release assays and the MP Lys content of the lots was calculated as described in Example 6. Results are presented in the Table 6.

**Table 6.**

| **Pastillated Granule #** | **Size range of pastillated granules, mm** | **Mean pastille diameter, mm** | **Average lysine particle size, microns** | **Lysine HCl, %** | **Lysine, %** | **Water soluble lysine, %** | **Rumen stable lysine, % of total lysine** | **Lysine release, % of rumen stable lysine** | **MP Lys, g/100 g of pastillated granule** |
|---|---|---|---|---|---|---|---|---|---|
| 18269-1 (6&7) | 2.8-3.4 | | 61 | 49.0 | 38.2 | 6.1 | 74.6 | 86.8 | 24.8 |
| 18269-1-2 (6&7) | 2.8-3.4 | | 70 | 50.8 | 39.6 | 3.8 | 71.3 | 94.8 | 26.8 |
| 18279-1 (6&7) | 2.8-3.4 | 3.36 | 64 | 49.1 | 38.3 | 4.1 | 79.3 | 86.7 | 26.3 |
| 18279-2 (6&7) | 2.8-3.4 | 3.26 | 71 | 51.2 | 39.9 | 6.9 | 58.7 | 91.4 | 21.4 |
| 18279-3 (6&7) | 2.8-3.4 | 3.25 | 62 | 51.3 | 40.0 | 9.2 | 67.6 | 84.1 | 22.7 |
| 18269-1-2 (7&8) | 2.4-2.8 | | 60 | 49.0 | 38.2 | 4.1 | 72.6 | 92.9 | 25.8 |
| 18279-2 (7&8) | 2.4-2.8 | 3.12 | 70 | 51.2 | 39.9 | 6.9 | 65.5 | 92.3 | 24.1 |
| 18279-3 (7&8) | 2.4-2.8 | 3.08 | 89 | 51.3 | 40.0 | 4.8 | 69.8 | 92.5 | 25.8 |
| | | **mean** | **68** | **50.4** | **39.3** | **5.7** | **69.9** | **90.2** | **24.7** |
| | | **stdev** | **44** | **1.1** | **0.9** | **1.9** | **6.2** | **3.8** | **1.9** |
| | | **CV, %** | **65** | **2** | **2** | **33** | **9** | **4** | **8** |

Pastilles within a 2.8-3.4 mm diameter or 2.4-2.8 mm diameter exhibited similar % rumen stability (70 vs 69), % intestinal release (89 vs. 93), and estimated MP Lys (24.4 vs. 25.2 g/100 g). Thus, a uniform pastillated granule with uniform stability and release of the lysine was produced.

### Example 8. Lysine status of dairy cows dosed with pastillated granules.

Studies were done to determine the ability of the pastillated granules to improve the lysine status of lactating cows. Pastillated granules were produced as described herein. Cows were fed diets formulated to provide nutrients sufficient to maintain body weight while supporting high amounts of milk output.

For each study, eight Holstein cows [BW (mean ± SD) = 598.2 ± 64.1kg; DIM = 117 ± 16] were assigned to 1 of 4 treatments in a replicated 4 × 4 Latin Square Design with experimental periods 7 days in length. Total length of the experiment for 2 prototypes was 28 days. Periods (7 days or d) were divided in washout phase (d 1, no treatment was delivered), adaptation 3 phase (d 2 to 4), in which treatments were delivered in gelatin capsules, and phase for statistical inferences (d 5 to 7) in which treatments were also delivered in gelatin capsules. Treatments were as follow; cows fed a basal diet + 115g of ground corn (**CON**); basal diet + 115g of a commercially-available rumen-protected lysine source (**AJP**) (positive control); basal diet + 115g of one example of a rumen-protected lysine source; and basal diet + 115g of a second example of a rumen-protected lysine source throughout the study. The study was repeated four times in order to evaluate eight different examples identified as A to H.

Treatments were delivered twice a day (12 hr-intervals) via 28-mL gelatin capsules (Structure Probe Inc., West Chester, PA), and administered orally via balling gun. All cows were fed the same diet throughout the trial once daily at 1300 h. The pastillated granules were manufactured in accordance with this disclosure and contained 50-55% lysine HCl and selected emulsifiers at 1% of the composition. Ajipro-L was used for AJP treatment (manufactured by Ajinomoto Heartland Inc., 8430 W. Bryn Mawr, #650, Chicago, IL).

Samples of total mixed ration (TMR) were obtained weekly and analyzed for dry matter (DM) see AOAC Official methods of analysis, 16th edition (AOAC, 1995a, Association of Official Analytical Chemists) by drying for 24 hours (h) in a forced-air oven at 110°C. Diet composition was adjusted weekly for changes in DM content of ingredients. The TMR offered and refused from each cow was recorded to determine intake based on weekly DM analyses. Total mixed ration samples were taken weekly (2 per period) and stored at -20°C until analyzed. Composite samples for the experimental period (n = 2) were analyzed for contents of DM, crude protein (CP), acid detergent fiber (ADF), neutral detergent fiber (NDF), lignin, non-fiber carbohydrate (NFC), sugar, starch, fat, ash, total digestible nutrient (TDN), Ca, P, Mg, K, Na, Fe, Zn, Cu, Mn, Mo, S and Se using wet chemistry methods (Cumberland Valley Analytical Services, Hagerstown, MD). Values for TDN and net energy lactation (NEL) were provided by the lab and calculated based on Nutrient Requirements of Dairy Cattle (NRC), http://www.nap.edu/catalog/nrs/ (2001). The physical characteristic of the TMR, based on the Penn State Particle Separator (Kononoff et al., 2003), was performed weekly.

Cows were milked 3 times daily at 0430, 12300, and 1930 h. Milk weights were recorded at every milking and samples were obtained at each milking from d 5 to 7 of each period. A preservative (800 Broad Spectrum Microtabs II; D&F Control Systems, Inc., San Ramon, CA) was added to the samples and stored in a refrigerator at 0°C for 3 d when they were composited in proportion to milk yield and sent to a commercial laboratory (Dairy One, Ithaca, NY) to be analyzed for contents of fat, true protein, casein, milk urea nitrogen (MUN), lactose, total solids, and for somatic cell count (SCC) using mid-infrared procedures (AOAC, 1995b).

Blood was sampled from the coccygeal vein or artery at 0800h, 1000h, 1200h, and 1400h on d 5, 6, 7 of each period from each cow, and on d -3, -2, and -1 of the first period to be used as a covariate (BD Vacutainer; BD and Co., Franklin Lakes, NJ). Serum and plasma samples were obtained by centrifugation of the tubes at 2,500 × g for 15 min at 4°C and stored at -80°C for further analysis. Plasma samples were pooled by cow by day and subjected to amino acid profile analysis.

The bioavailable lysine content of examples A-H was determined by assessing relative changes in plasma free amino acid concentrations when cows were fed CON or dosed with AJP or test products. This approach assumes a positive linear relationship for absorbed lysine and plasma lysine concentration. Numerous publications have validated the approach as biologically relevant and useful in determining the delivery of absorbable lysine to the abomasum or intestines of the animal (Guinard and Rulquin, 1994; King et al., 1991; Rulquin and Kowalczk, 2003).

Bioavailable lysine content of the encapsulated lysine products was determined by assessing plasma free lysine content as a percentage of total amino acids (TAA) when cows were bolused with test product or AJP. The commercially available AJP product has a reported bioavailable lysine content of 25.6 g per 100 g. This value was used to estimate delivery of bioavailable lysine for test products A to H using the following equation: Grams of bioavailable lysine (grams per 100 g) = [(Product Plasma Lysine, % of TAA - CONT Plasma Lysine, % of TAA)/(AJP Plasma Lysine, % of TAA - CONT Plasma Lysine, % of TAA)] * 25.6.

Table 7 shows the effects on plasma free amino concentration of dosing cows with AJP or examples A to H. Examples A and F did not elicit beneficial effects on plasma lysine content. Example A failed because the pastille was out of specified range for pastille median size, whereas F failed because the emulsifier (SMS) may have caused inferior release of lysine in the abomasum-small intestine. Examples B, C, D, E, G, and H demonstrated varying potential for delivery of bioavailable lysine. Example C demonstrated superior properties, with and estimated delivery of 36 g of bioavailable lysine per 100 g of product. The studies show benefits for improving lysine status of lactating dairy cows by encapsulating lysine using the processing method disclosed herein.

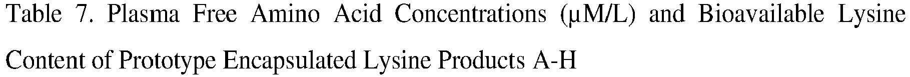

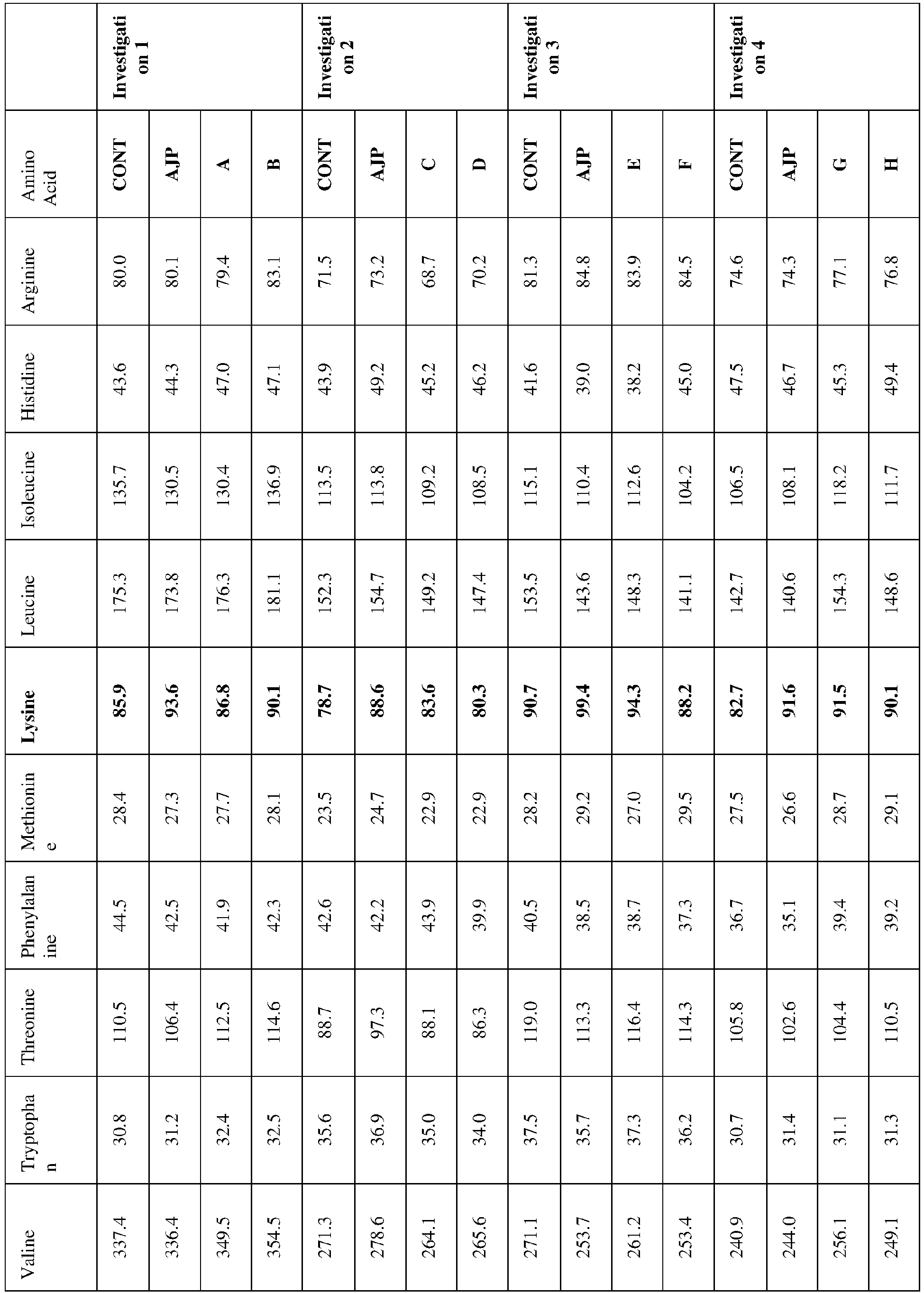

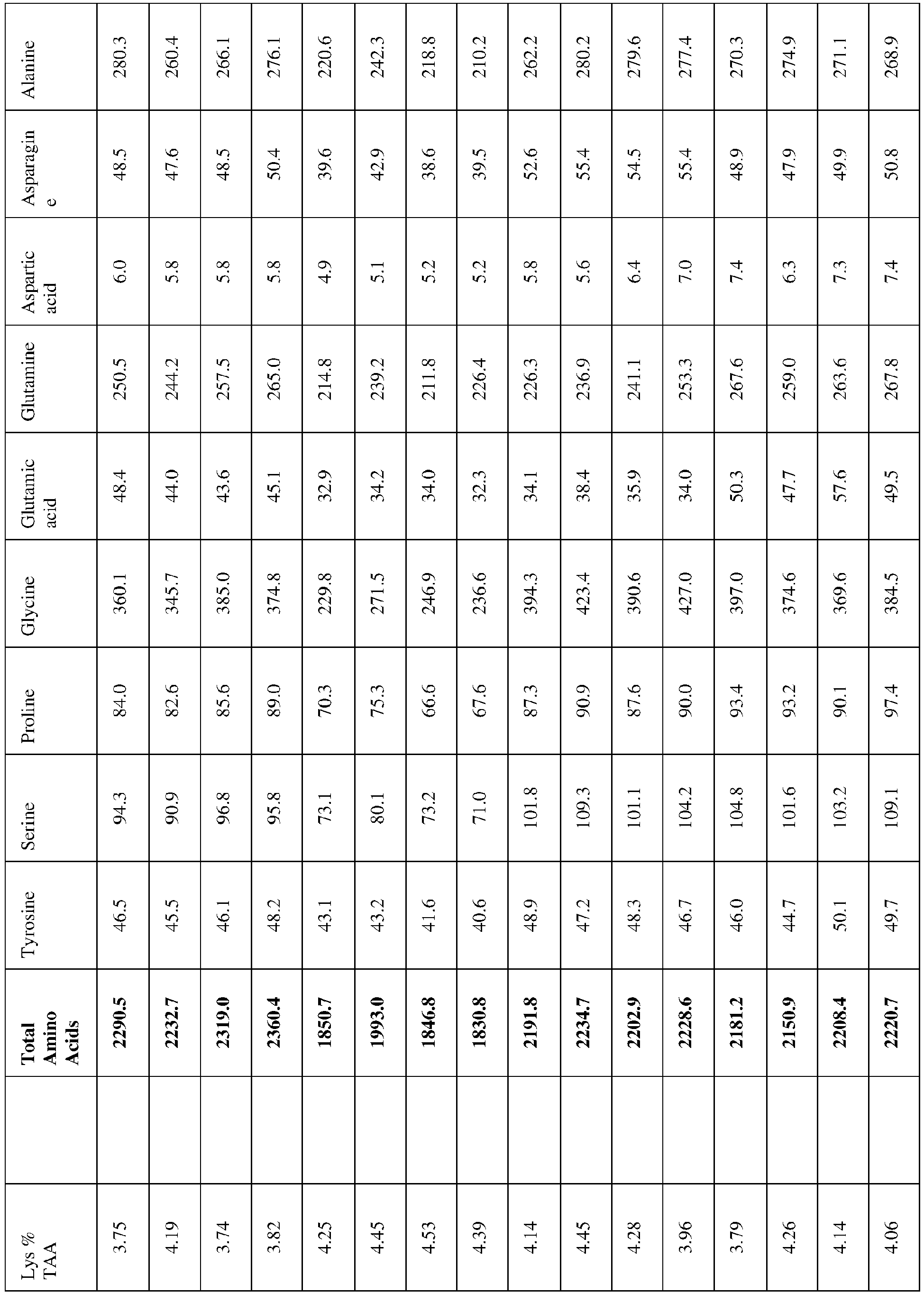

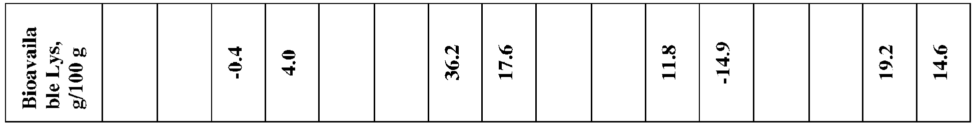

### Example 9. Effects of encapsulated Lys on milk production by lactating cows.

A study was conducted to investigate the ability of pastillated granules to affect the lysine status and milk production of lactating cows. Pastillated granules were formed substantially as described herein. Lactating Holstein cows were fed a diet formulated to provide nutrients sufficient to maintain body weight while supporting high amounts of milk output. Eight Holstein cows [BW (mean ± SD) = 598.2 ± 64.1kg; DIM = 117 ± 16] were assigned to 1 of 4 treatments in a replicated 4 × 4 Latin Square Design with experimental periods 7 days in length. Total length of the experiment for 2 prototypes was 28 days. Periods (7 d) were divided in washout phase (d 1, no treatment was delivered), adaptation 3 phase (d 2 to 4), in which treatments were delivered in gelatin capsules, and phase for statistical inferences (d 5 to 7) in which treatments were also delivered in gelatin capsules. Treatments were as follow; cows fed a basal diet + 115g of ground corn (**CON**); basal diet + 115g of a commercially-available rumen-protected lysine source (**AJP**) (positive control); basal diet + 115g of pastillated Lys granule, identified as Rumen Protected Lys A (**RPL A**); and basal diet + 115g of a second rumen-protected lysine prototype identified as Rumen Protected Lys B (**RPL B**) throughout the study period.

Cows were milked 3 times daily at 04:30, 12:30, and 19:30 h. Milk weights were recorded at every milking and samples were obtained at each milking from d 5 to 7 of each period. A preservative (800 Broad Spectrum Microtabs II; D&F Control Systems, Inc., San Ramon, CA) was added to the samples and stored in a refrigerator at 0°C for 3 d when they were composited in proportion to milk yield and sent to a commercial laboratory to be analyzed for contents of fat, true protein, casein, milk urea nitrogen, lactose, total solids, and for somatic cell count (SCC) using mid-infrared procedures (AOAC, 1995b).

The results of the study are presented in Table 8. There were no treatment differences for feed intake, body weight (BW), feed intake as a percent of BW, milk yield, or milk composition. Dry matter intake was higher for RPL B cows compared to AJP (P = 0.006). There was a tendency for milk yield being higher for RPL B cows compared to AJP (P = 0.07). Also fat-corrected milk (3.5%) tended to be higher for cows in RPL B compared with AJP cows (*P* = 0.11). Protein percentage was higher for RPL B cows compared to AJP (*P* = 0.02; CONT3). Cows dosed with RPL B had decreased milk urea nitrogen concentration compared to cows dosed with AJP (*P* = 0.05); also cows in CON had lower milk urea nitrogen concentration compared to cows in AJP (*P* = 0.01). Somatic cell count was lower for RPL B cows compared to AJP (*P* = 0.005).

**Table 8.**

| Item | CON | AJP | RPL A | RPL B | SEM | P < .05 |
|---|---|---|---|---|---|---|
| Feed dry matter intake, kg/day | 22.5 | 22.3 | 23.1 | 24.0 | .93 | AJP vs RPL B |
| Milk yield, kg/day | 39.7 | 39.1 | 40.1 | 40.9 | 2.05 | AJP vs RPL B |
| Milk fat, % | 3.94 | 3.82 | 3.78 | 3.76 | .19 | NS |
| Milk fat, kg/day | 1.51 | 1.46 | 1.47 | 1.51 | .06 | NS |
| Milk protein, % | 2.98 | 2.96 | 2.99 | 3.00 | .06 | NS |
| Milk protein, kg/day | 1.17 | 1.14 | 1.19 | 1.21 | .06 | AJP vs RPL B |
| Milk urea nitrogen, mg/dL | 15.9 | 17.2 | 16.5 | 16.1 | .01 | AJP vs RPL B |

There is a difference between RPL B and CON, where RPL B showed higher feed intake and a tendency for higher milk yield. Also, cows in RPL B had lower milk urea nitrogen concentrations compared to cows in AJP suggesting that the latter could be having higher protein breakdown. The results of this study demonstrate that the encapsulated Lys formed by the method described herein can be used to improve intake and milk yield of lactating ruminants compared with commercially available encapsulated Lys.

### Example 10. Effect of emulsifier on nutrient content and rumen stability of pastilles.

A series of studies were undertaken to evaluate the relationship of emulsifier or surfactant selection on the ability to form pastilles containing increasing nutritive solids content. Lysine HCl was initially evaluated having a particle size passing a 60 mesh screen or a 100 mesh screen. Monoglycerides (Alphadim 90 SBK), sorbitan mono-stearate (SMS), lecithin emulsifiers, or combinations were studied at 1% addition, or at 1.5 % as solids content approached the limitation of viscosity to form pastilles. Histidine, methionine, and choline chloride were then compared as alternate examples of the process to form initial estimates of load rates and stability.

FIG. 18 shows the relationship between emulsifier composition, level of added lysine HCl, and rumen stability for pastilles between 3 and 5 mm in diameter. Use of SBK provided good rumen stability, but viscosity limited inclusion of Lysine to about 55% of the composition, in contrast for this test use of lecithin increased allowable solids to 65%. Use of SMS alone was intermediate reaching 60% solids inclusion while maintaining a rumen stability greater than 70% of the protein value (RUP, % CP). Increasing solid load generally resulted in a curvilinear decrease in rumen stability. Combinations of SMS and lecithin provided improved rumen stability in comparison to lecithin and increased the potential load rate as compared to SMS.

Presented in Table 9, the comparison of small or large pastilles containing 55% Lysine HCL indicated small differences in rumen stability when SMS alone was used as compared to a larger variance of the composition based on a 50:50 yelkin and SMS blend. Rumen stability could also be manipulated by altering viscosity with increased level of surfactant where the stability of small pastilles decreased from 87.7% to 73.7 % RUP (% of CP) as SMS was increased from 1 to 1.5% of the composition.

As presented in the table, the characteristics of the nutrient also influence the load rate that may be obtained and the stability of the resulting particle. Emulsifier blends allowed successful formation of pastilles at a solids content of 60% for methionine, 65% for lysine HCL, and 70% for histidine. Choline HCL is also presented to demonstrate the potential for physical delivery of nutrients other than amino acids.

**Table 9.**

| The Relationship of emulsifier level and choice, pastille size, nutrient load and rumen stability (RUP % CP). | | | | | |
|---|---|---|---|---|---|
| Nutrient | Emulsifier | | Solids | Pastille | Stability |
| | type | % | Content | Size | RUP, %CP |
| Lysine HCL | Y50:SMS50 | 1 | 55 | Small | 66.9 |
| Lysine HCL | Y50:SMS50 | 1 | 55 | Large | 75.9 |
| Lysine HCL | SMS | 1 | 55 | Small | 87.7 |
| Lysine HCL | SMS | 1 | 55 | Large | 85.2 |
| Lysine HCL | SMS | 1.25 | 55 | Small | 82.6 |
| Lysine HCL | SMS | 1.5 | 55 | Small | 73.7 |
| Lysine HCL | Y50:SMS50 | 1 | 65 | ---- | 57.6 |
| Histidine | Y33:SMS67 | 1 | 70 | ---- | 78.7 |
| Methionine | Y25:SMS75 | 1 | 60 | ---- | 76.2 |
| Choline HCL | SMS | 1 | 35 | ---- | 10.8 |

The results of this Example demonstrates the ability to adjust the type and level of emulsifier to accommodate multiple nutrients in the formation of encapsulated granules and the potential to adjust delivery within the digestive tract of the animal. Material optimization for a given nutrient, amino acid, vitamin, or phytonutrient, will develop from the viscosity formed from the physical properties of the solids and emulsifier composition to allow granule formation also interacting with solids load rate, emulsifier content, and granule size to provide appropriate delivery of the nutrients.

Aspects of the disclosure include:
Discovery of selection of one or a combination of emulsifier(s) to maximize the content of dry solids in a slurry, with fine-tuning of the formulation based upon amino acid properties such as hydrophilicity, particles size, and inclusion of additional nutritive additives, such as, botanical extracts. In an aspect of the disclosure, a solids content exceeding 50% in the pastillation-deposition process is enabled. Further novelty benefiting utility is the option to formulate compositions comprising maximal inclusion of dry solids, perhaps to 60-65% (e.g., in the case of lysine HCl) or 65-70% (in the case of histidine), or alternately use of a broader profile of particle distribution than otherwise practiced, especially as adjusted for rheology and desired final size of pastille.. These concentrations exceed those of commercially available products in the market at present, which enables an improved utility in practice.

The use of the polyglycerol emulsifiers in encapsulates for animals, which provides improved properties relative to at least sorbitan esters and they appear effective alternatives to lecithin. Use of the emulsifiers such as PGE can enable greater solids content and/or greater flexibility in solid particle size.

Inclusion of functional additives, such as enzymes or phytonutrients, into an encapsulated amino acid product to enhance animal utilization. Materials such as mint (menthol) and capsaicin can alter inflammation or blood flow in animals. With phytonutrients enhancing absorptive capacity of intestinal tissue, it may be inferred that greater absorption and utilization of the amino acid is delivered to the intestines of a ruminant animal by using the encapsulated amino acid product made in accordance with the present invention than a non-encapsulated amino acid product, i.e., free amino acid product.

The inclusion of botanicals creates an additional adjustment for rheology based on function within the material matrix with both increases and decreases in viscosity relative to solids observed. For example, inclusion of curcumin increased viscosity to a greater extent in interaction with lecithin than with SMS indicating a substantial amount of fine-tuning and customization may be required to optimize a product that delivers nourishment and functionality in a single product form.

While this invention has been particularly shown and described with references to preferred embodiments thereof, it will be understood by those skilled in the art that various changes in form and details may be made therein without departing from the scope of the invention encompassed by the appended claims.

### ITEMS

1. A process of encapsulating or coating an animal feed ingredient, the method comprising:
   (a) mixing an emulsifier with a coating agent, thereby forming a coating mixture; and
   (b) placing the coating mixture over an animal feed ingredient particle, thus encapsulating or coating the animal feed ingredient.
2. The process of item 1, wherein the emulsifier is selected from the group lecithin, monoglyceride, sorbitan ester, polyglycerols, and combinations thereof.
3. The process of item 1, wherein the coating agent is selected from the group consisting of an oil and a fatty acid, and combinations thereof.
4. The process of item 1, wherein the animal feed ingredient is an amino acid.
5. A process of encapsulating amino acid particles, the process comprising:
   (a) mixing a monoglyceride with a hydrogenated vegetable oil, thereby producing a coating mixture; and
   (b) mixing the coating mixture with amino acid particles to form a slurry;
   (c) heating the slurry to form a product melt; and
   (d) depositing the product melt as substantially uniform and dust free pastille granules onto a belt cooler.
6. The process of item 5, wherein the amino acid particles is selected from the group consisting of lysine particles, methionine particles, histidine particles, choline particles, and combinations thereof.
7. The process of item 5, wherein the product melt is conveyed to a pastillator and deposited from the pastillator onto the belt cooler.
8. The process of item 7, wherein the product melt is filtered to remove undesirable large particles from the product melt before being conveyed to the pastillator.
9. The process of item 7, wherein the pastillator is configured to produce pastille granules in the range of 1 to 25 mm in diameter.
10. The process of item 7, wherein the produced pastille granules comprise greater than 50% by weight of a nourishing amino acid.
11. The process of item 7, wherein the produced pastille granules, when fed to a ruminant animal delivers a high amount of absorbable amino acid to the animal for direct nourishment, wherein the amino acid is not substantially fermented in the rumen of the animal.
12. The process of item 7, wherein the pastillator comprises a heated cylindrical stator, wherein the heated cylindrical stator comprises a perforated rotating shell that turns concentrically around the stator, and deposits the pastille granules across an operating width of the belt cooler.
13. A substantially uniform and dust free pastille granule product, when fed to a ruminant animal delivers high amount of absorbable amino acid to the animal for direct nourishment, wherein the amino acid is not substantially fermented in the rumen of the animal.
14. The substantially uniform and dust free pastille granule product of item 13 comprising greater than 50% by weight of a nourishing amino acid.
15. A product produced by the process of any one of items 1-12.
16. A pastillated granule, comprising:
   an amino acid;
   an emulsifier; and
   a coating agent;
   wherein the pastillated granule is in a shape approximating a half-sphere having an aspect ratio (diameter/height) of 1.5 to 2.5.
17. The pastillated granule of item 16, wherein the amino acid is selected from the group consisting of lysine, histidine, methionine, choline, and combinations of any thereof.
18. The pastillated granule of item 16 or item 17, wherein the emulsifier is selected from the group consisting of lecithin, monoglyceride, sorbitan ester, polyglycerols, and combinations thereof.
19. The pastillated granule of any one of items 16-18, wherein the coating agent is selected from the group consisting of an oil, a fatty acid, and combinations thereof.
20. The pastillated granule of any one of items 16-18, wherein the coating agent is a hydrogenated vegetable oil.
21. The pastillated granule of any one of items 16-20, wherein the pastillated granule has a size of 2.2-5.0 mm.
22. The pastillated granule of any one of items 16-20, wherein the pastillated granule has a size of 2.2-3.5 mm.
23. The pastillated granule of any one of items 16-22, wherein the amino acid has a particle size of 50-120 mesh.
24. The pastillated granule of any one of items 16-22, wherein the amino acid has a particle size of 80-110 mesh.
25. The pastillate granule of any one of items 16-22, wherein the amino acid is present in the pastillated granule at 25-85% by weight, 25-75% by weight, or 35-75% by weight.
26. A method of feeding an animal comprising:
   mixing the pastillated granule of any one of items 16-25 with an animal feed ingredient, thus producing an animal feed; and
   feeding the animal feed to an animal.
27. The method of item 26, wherein the animal is a ruminant.
28. A process of encapsulating amino acid particles, the process comprising:
   mixing an emulsifier with a coating agent, thereby producing a coating mixture; and
   mixing the coating mixture with an amino acid particle to form a slurry;
   forming pastilles with the slurry; and
   depositing the pastilles onto a belt.
29. The process of item 28, further comprising heating the coating mixture.
30. The process of item 28 or item 29, further comprising cooling the pastilles on the belt

## Claims

1. A process of encapsulating amino acid particles, the process comprising:
(a) mixing a monoglyceride with a hydrogenated vegetable oil, thereby producing a coating mixture; and
(b) mixing the coating mixture with amino acid particles to form a slurry;
(c) heating the slurry to form a product melt; and
(d) depositing the product melt as substantially uniform and dust free pastille granules onto a belt cooler.

2. The process of claim 1, wherein the amino acid particles is selected from the group consisting of lysine particles, methionine particles, histidine particles, choline particles, and combinations thereof.

3. The process of claim 1, wherein the product melt is conveyed to a pastillator and deposited from the pastillator onto the belt cooler.

4. The process of claim 3, wherein the product melt is filtered to remove undesirable large particles from the product melt before being conveyed to the pastillator.

5. The process of claim 3, wherein the pastillator is configured to produce pastille granules in the range of 1 to 25 mm in diameter.

6. The process of claim 3, wherein the produced pastille granules comprise greater than 50% by weight of a nourishing amino acid.

7. The process of claim 6, wherein the pastillator comprises a heated cylindrical stator, wherein the heated cylindrical stator comprises a perforated rotating shell that turns concentrically around the stator, and deposits the pastille granules across an operating width of the belt cooler.

8. A product obtainable by the process of any of the previous claims.
